# EUROPEAN PATENT APPLICATION

(11) **EP 4 492 757 A1**
(43) Date of publication of application: **15.01.2025**
(21) Application number: 24187402.3
(22) Date of filing: 09.07.2024
(51) Int. Cl.: H04L 69/14

(54) **INFORMATION PROCESSING PROGRAM, INFORMATION PROCESSING METHOD, AND INFORMATION PROCESSING APPARATUS**

(30) Priority: 11.07.2023 JP 2023113851
(71) Applicant: Yokogawa Electric Corporation, Tokyo 180-8750 (JP)
(72) Inventor: KAWAMURA, Hayato, Musashino-shi, Tokyo 180-8750 (JP); OHNO, Takeshi, Musashino-shi, Tokyo 180-8750 (JP); TSUCHIYA, Masanobu, Musashino-shi, Tokyo 180-8750 (JP)
(74) Representative: Winter, Brandl - Partnerschaft mbB

(57) **Abstract**

The information processing program causes an information processing apparatus (10) to execute a processing of generating a first transmission frame and a second transmission frame by duplicating a transmission frame of a data link layer in response to accepting a transmission request for data that is used for process control, transmitting the first transmission frame to a first NIC, transmitting the second transmission frame to a second NIC, transmitting the first transmission frame in the first NIC to a network, and transmitting the second transmission frame in the second NIC to the network.

## Description

### FIELD

The present invention relates to an information processing program, an information processing method, and an information processing apparatus.

### BACKGROUND

A process control system, such as a Distributed Control System (DCS), that is a facility for operating a plant or a factory is a system for implementing an automatic operation on the plant or the factory by collecting, by a controller, various kinds of state quantities (for example, pressure, temperature, a flow rate, etc.) of an industrial process in a constant period (for example, a period of one seconds) from a sensor (a thermometer, a flowmeter, etc.), performing control logic that is generated by a user, and operating an actuator (a valve, etc.) on the basis of the obtained result.

In the case where the control logic that is performed by the above described type of control system is operated on a plurality of controllers, the control logic is executed by being sent and received to and from the controllers in cooperation with each other. A control process processing that is performed on the basis of the control logic in the constant period is implemented by communication that is referred to as C2D communication performed between a controller and an input/output device, such as a sensor or an actuator, or communication that is referred to as C2C communication performed between the plurality of controllers.

This type of control process processing performed in the constant period needs to be stably and continuously performed for a long time, so that both high availability and high real-time performance are required for the control system. As a result of this, similarly to control communication that is called out from the control process processing performed in the constant period, both high availability communication and high real time communication are also required, in addition to high reliability communication.

Here, the high reliability communication is communication in which, for example, pieces of transmitted data are accurately delivered to a communication destination without being lost nor bit garbled on the data in the transmission order of the pieces of data. Furthermore, the high availability communication is communication in which, for example, two physically independent communication paths are prepared in advance, and the control system, by itself, restores the communication by using an alternate path in the case where a communication abnormality, such as a single failure, including a case in which a NIC or a relay device is failed or a communication cable is disconnected in a midstream of the current path, or the like has occurred. Moreover, high real time communication is communication, in which, for example, sending and receiving data to and from the communication destination has been completed within request time.

Furthermore, a device that is controlled by the control system is not limited to the DCS, but may also include a supervisory control and data acquisition (SCADA), a programmable logic controller (PLC), and the like, and may also include, for example, a device with a unique controller (rotary appliance, etc.), a device, such as a bar code reader or a weighing machine, in a batch plant area, or the like. Moreover, the device that is controlled by the control system may also be applied to, for example, a computer network system constituted by personal computers (PC), general-purpose embedded devices, or the like, a system in which high-speed switching to an alternate path is required upon occurrence of abnormality in the communication path is requested, and the like.

Furthermore, the plant or the factory is one example of various kinds of plants or factories that use petroleum, petrochemicals, chemical substances, gas, or the like, and includes a plant or a factory that is provided with various facilities for obtaining product materials. Moreover, examples of the product materials include liquefied natural gas (LNG), a resin (plastic, nylon, etc.), and chemical substance products. Furthermore, examples of the facilities include a factory facility, a machine facility, a production facility, an electric-generating facility, a storage facility, and a facility in a wellhead for mining petroleum, natural gas or the like.

Non-Patent Document 1: Demachi Kouji, et al., "Vnet/IP real-time plant network system", Yokogawa Technical Report, Vol.49, No.2, 2005

However, in high real time communication, the downtime of communication in a period between an occurrence of a communication abnormality and restoration of the communication needs to be within a control scan period (for example, one seconds), but, a conventional control method is not adequate to meet the demand for the high real time communication.

An object of the present invention is to perform high real time communication while ensuring communication having high reliability and high availability with respect to process control communication.

### SUMMARY

According to an aspect of the embodiments, an information processing program that causes an information processing apparatus to execute a processing includes generating a first transmission frame and a second transmission frame by duplicating a transmission frame of a data link layer in response to accepting a transmission request for data that is used for process control, transmitting the first transmission frame to a first network interface card (NIC), transmitting the second transmission frame to a second NIC, transmitting the first transmission frame in the first NIC to a network, and transmitting the second transmission frame in the second NIC to the network.

According to an aspect of the embodiments, an information processing method that causes an information processing apparatus to execute a processing includes generating a first transmission frame and a second transmission frame by duplicating a transmission frame of a data link layer in response to accepting a transmission request for data that is used for process control, transmitting the first transmission frame to a first network interface card (NIC), transmitting the second transmission frame to a second NIC, transmitting the first transmission frame in the first NIC to a network, and transmitting the second transmission frame in the second NIC to the network.

According to an aspect of the embodiments, an information processing apparatus includes a dual output unit that is configured to generate a first transmission frame and a second transmission frame by duplicating a transmission frame of a data link layer in response to accepting a transmission request for data that is used for process control, transmit the first transmission frame to a first network interface card (NIC), transmit the second transmission frame to a second NIC, transmit the first transmission frame in the first NIC to a network, and transmit the second transmission frame in the second NIC to the network.

### BRIEF DESCRIPTION OF THE DRAWINGS

FIG. 1 is a diagram illustrating an example of a configuration of a control system according to a conventional technology;
FIG. 2 is a diagram illustrating an example of a configuration of an information processing apparatus 10 according to the conventional technology;
FIG. 3 is a diagram illustrating one example of high reliability communication information 50;
FIG. 4 is a diagram illustrating one example of a format of a transport layer packet;
FIG. 5 is a diagram illustrating one example of a format of a data link layer frame;
FIG. 6 is a flowchart illustrating the flow of a delivery confirmation processing performed by a delivery confirmation transmission unit 26;
FIG. 7 is a flowchart illustrating the flow of a delivery confirmation processing performed by a delivery confirmation reception unit 27;
FIG. 8 is a flowchart illustrating the flow of a reception processing of an acknowledgment response performed by the delivery confirmation reception unit 27;
FIG. 9 is a diagram illustrating an example of a configuration of a control system according to the basic invention;
FIG. 10 is a diagram illustrating an example of a configuration of the information processing apparatus 10 according to the basic invention;
FIG. 11 is a flowchart illustrating the flow of a dual path and dual output processing performed by a dual path and dual output unit 45;
FIG. 12 is a diagram illustrating an example of a configuration of the information processing apparatus 10 according to the applied invention;
FIG. 13 is a diagram illustrating one example of path redundancy information 51;
FIG. 14 is a flowchart illustrating the flow of a simple sequence number issuing processing performed by a simple sequence number issuing unit 46;
FIG. 15 is a flowchart illustrating the flow of a simple duplicate detection processing performed by a simple duplicate detection unit 47; and
FIG. 16 is a diagram illustrating an example of a hardware configuration of the information processing apparatus 10 according to the present embodiment.

### DETAILED DESCRIPTION OF THE PREFERRED EMBODIMENTS

Preferred embodiments of an information processing program, an information processing method, and an information processing apparatus disclosed in the present invention will be described in detail below with reference to the accompanying drawings. In addition, the same components are denoted by the same reference numerals and an overlapping description will be omitted. Each of the embodiments can be used in any appropriate combination as long as they do not conflict with each other. Furthermore, a protocol converter is one example of the information processing apparatus.

The present embodiment solves problems in a process control system according to the conventional technology. Accordingly, the present embodiment may be constituted on the basis of a configuration of the control system according to the conventional technology. Therefore, first, the control system according to the conventional technology will be described.

### Configuration of control system according to conventional technology

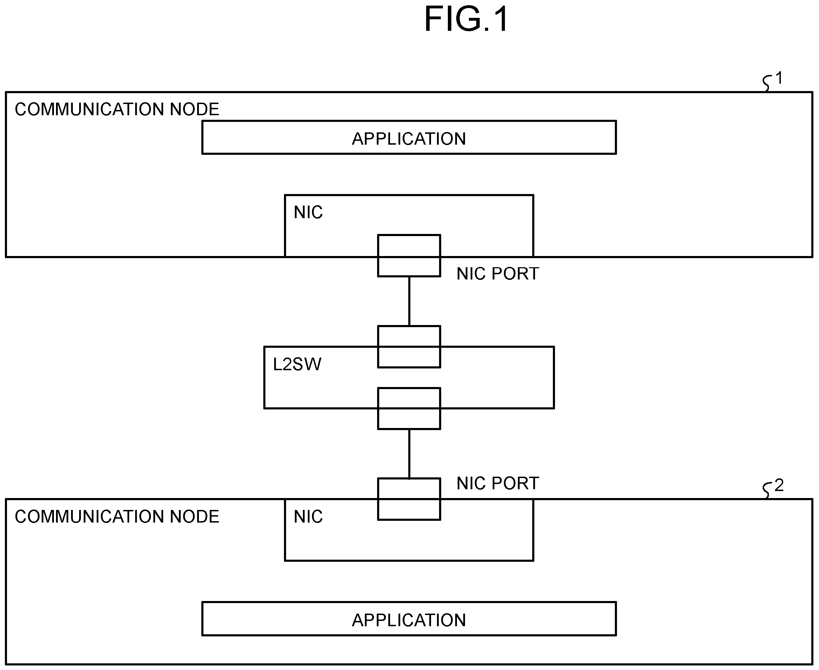

FIG. 1 is a diagram illustrating an example of a configuration of a control system according to the conventional technology. As illustrated in FIG. 1, the control system according to the conventional technology is a system in which a communication node 1 and a communication node 2 are connected so as to be able to communicate each other by way of a network interface card (NIC) and a layer 2 switch (L2SW). The NIC is a communication unit that controls communication with, for example, another device or communication between the other devices, that sends and receives data to and from a network cable, and that is a communication interface, such as a network interface card. The L2SW is a network device having data transfer capacity, a bridge function, and the like in a data link layer of, for example, the open system interconnection (OSI) reference model.

Furthermore, for the network between the communication node 1 and the communication node 2, for example, various kinds of communication networks, such as an intranet or the Internet, may be used irrespective of a wired or wireless manner. Moreover, instead of a single network, the network may be constituted of, for example, an intranet and the Internet by way of a network device, such as a gateway, or by way of another device (not illustrated).

Each of the communication node 1 and the communication node 2 is, for example, a component device in the control system, and is a controller, an input/output device, or the like. Hereinafter, the communication node 1 and the communication node 2 are sometimes collectively referred to as the "information processing apparatus 10". The information processing apparatus 10 may also be an information processing apparatus, such as a desktop PC, a notebook PC, or a server computer, that is managed by an administrator or the like of, for example, a plant, a factory, or the like. Alternatively, the information processing apparatus 10 may be a cloud computer device managed by a service provider that provides, for example, a cloud computing service.

Furthermore, as illustrated in FIG. 1, each of the communication node 1 and the communication node 2 is provided with, for example, an application. The application is a control processing unit that performs control communication with, for example, another device or between the other devices.

Functional configuration of information processing apparatus 10 according to conventional technology

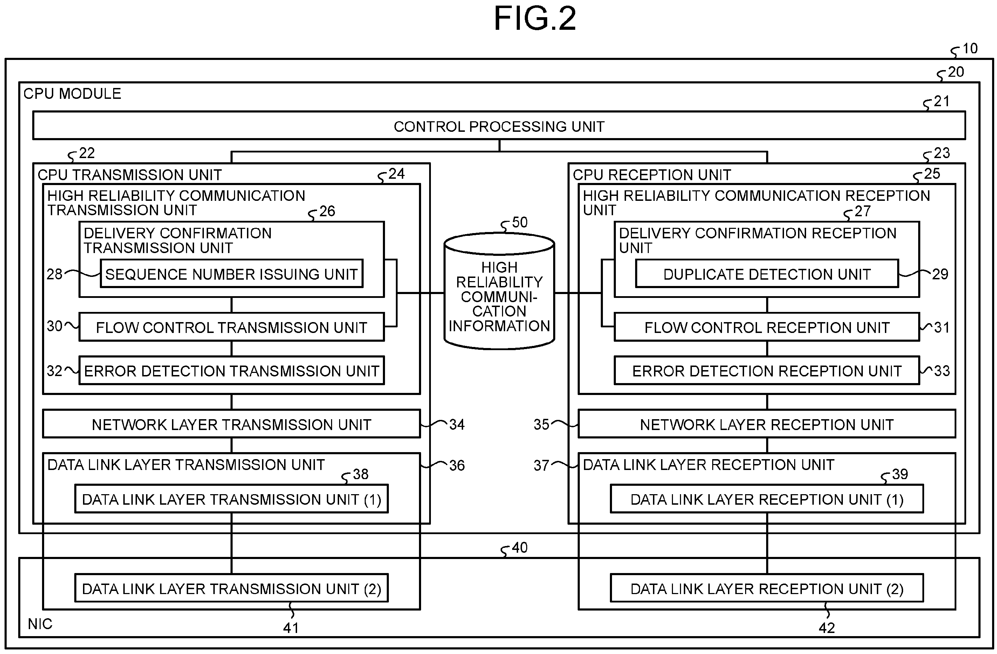

In the following, a functional configuration of the information processing apparatus 10 that corresponds to the main subject of the conventional technology will be described. FIG. 2 is a diagram illustrating an example of a configuration of the information processing apparatus 10 according to the conventional technology. As illustrated in FIG. 2, the information processing apparatus 10 includes, for example, a CPU module 20 that is a control unit, and a NIC 40 that is a communication unit. Furthermore, the information processing apparatus 10 has a function of storing therein various kinds of data on, for example, the high reliability communication information 50 and various kinds of programs, and includes a storage unit that implements the function by a storage device, such as a memory, a hard disk, or the like.

First, each of the processing units included in the information processing apparatus 10 provided on the data transmission side, that is, the communication node 1, will be described. A control processing unit 21 included in the CPU module 20 is an application for executing, for example, a control processing, and outputs a transmission request to a CPU transmission unit 22 in order to perform a control processing of C2C communication and C2D communication.

The CPU transmission unit 22 includes, for example, a high reliability communication transmission unit 24, a network layer transmission unit 34, and a data link layer transmission unit 36, and performs high reliability communication in response to the transmission request received from the control processing unit 21. Furthermore, the high reliability communication mentioned here is, for example, a communication processing performed on communication data in a highly reliable manner. In the high reliability communication, for example, a delivery confirmation processing, a flow control processing, an error detection processing, and the like that are to be performed on the communication data are included. An example of a communication protocol that implements the high reliability communication includes, for example, a transmission control protocol (TCP).

In the following, the delivery confirmation processing, the flow control processing, and the error detection processing will be further specifically described. The delivery confirmation processing is a processing of performing delivery confirmation in order for, for example, a transmission node, to certainly deliver the data transmitted by the transmission node to the reception node, and a processing of retransmitting the data in the case where the delivery confirmation is not able to be obtained within a defined period of time. Furthermore, the delivery confirmation indicates that the reception node sends an acknowledgment response with respect to the reception data back to the transmission node, and is implemented by, for example, the TCP.

The flow control processing is a processing of adjusting performed by the transmission node, for example, an amount of transmission of a packet in accordance with a reception processing capacity of the reception node in order for the reception node to prevent a reception error of the transmission data, and is implemented by, for example, a TCP.

The error detection processing is a processing of checking performed by the reception node, for example, whether the reception node has received corrupted data in which a bit error has occurred. For example, a cyclic redundancy check (CRC) for detecting an error in an Ethernet (registered trademark) frame in the data link layer of the OSI reference model, a checksum that is used to detect an error in an IP of the network layer or each of the headers of the TCP of the transport layer, and the like are included as an example. Furthermore, a CRC value of the Ethernet is added to the end of the frame that is referred to as a frame check sequence (FCS), and the checksum value of each of the IP and the TCP is added to the header. Each of the CRC value and the checksum value is calculated in accordance with the respective algorithms at the transmission node, a result is added to the respective headers, is compared with the result that is re-calculated at the reception node, and is determined that the data is not corrupted in the case where the results are matched, or is determined that the data is corrupted in the case where the results are not matched. Therefore, in the case where an amount of communication data is large, the processing load exerted on the CPU module is increased.

The high reliability communication transmission unit 24 has a role of, for example, the higher layers between the transport layer and the application layer in the OSI reference model. The high reliability communication transmission unit 24 includes, for example, the delivery confirmation transmission unit 26, a flow control transmission unit 30, and an error detection transmission unit 32, and the same function as the functions performed these units is packaged in the TCP of the transport layer.

The delivery confirmation transmission unit 26 includes, for example, a sequence number issuing unit 28, and, in the case where delivery confirmation transmission unit 26 transmits data, the delivery confirmation transmission unit 26 transmits the data after calling out the sequence number issuing unit 28 and performs a processing on the data. The sequence number issuing unit 28 assigns, in order to uniquely identify, for example, the transmission data, a transmission sequence number that is managed by and stored in the high reliability communication information 50 to the packet header, and updates the transmission sequence number that is stored in the high reliability communication information 50 in order to be used for the next data transmission. Furthermore, in the case where the delivery confirmation transmission unit 26 does not receive an acknowledgment response with respect to the transmission data from, for example, the delivery confirmation reception unit 27 provided on the data reception side within a defined period of time, the delivery confirmation transmission unit 26 retransmits the data. Moreover, in the case where an acknowledgment response is transmitted, for example, an acknowledgment response number that is stored in the high reliability communication information 50 is assigned to the packet header of the acknowledgment response.

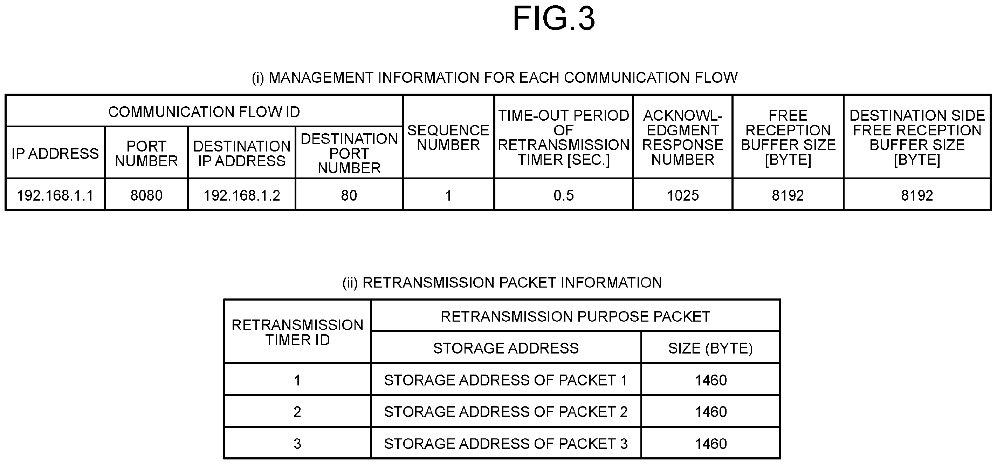

In the following, the high reliability communication information 50 will be more specifically described. The high reliability communication information 50 is information that is stored in, for example, a storage unit included in the information processing apparatus 10, that is referred to by both the CPU transmission unit 22 and a CPU reception unit 23, and that is updated. FIG. 3 is a diagram illustrating one example of the high reliability communication information 50. As illustrated in FIG. 3, the high reliability communication information 50 sores therein in an associated manner, for example, as the management information for each communication flow, information, such as a communication flow ID, a sequence number, a time-out period of a retransmission timer, an acknowledgment response number, a free reception buffer size, and a destination side free reception buffer size.

The communication flow ID stored as the management information for each communication flow is, for example, an identifier for identifying a communication flow of the control communication. More specifically, for example, as illustrated in FIG. 3, in a case of a TCP/IP, the communication flow ID indicates an IP address and a TCP port number of each of the communication source and the communication destination. It is possible to uniquely identify the communication flow with these identifiers.

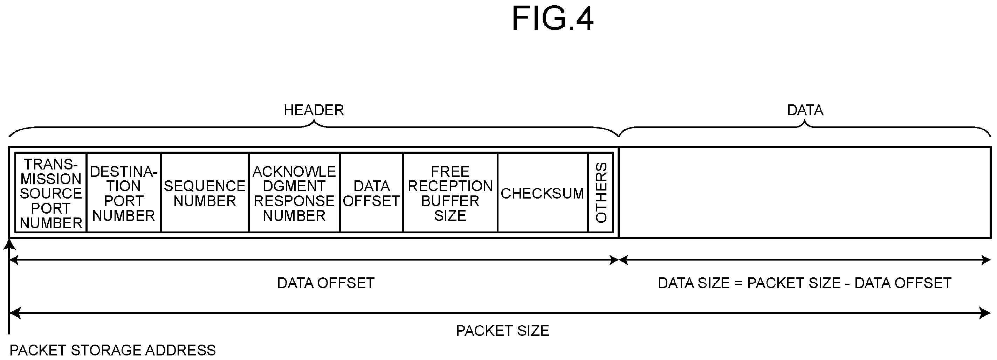

The sequence number stored as the management information for each communication flow is, for example, a sequence number that indicates the data that is to be transmitted by the delivery confirmation transmission unit 26 next time, and indicates the location of the data to be transmitted in an area included in all of the pieces of transmission data. FIG. 4 is a diagram illustrating one example of the format of the transport layer packet. As illustrated in FIG. 4, the sequence number is assigned to, for example, a header portion of a transport layer packet. Furthermore, in a case of a TCP, the sequence number is incremented by one (+1) for each byte per data every time data is transmitted by the delivery confirmation transmission unit 26, so that the sequence number is updated by adding by an amount equal to the transmission data size to the sequence number at the time of data transmission. Furthermore, the initial value of the sequence number is notified to the communication destination when, for example, a connection of the TCP has been established.

The time-out period of the retransmission timer stored as the management information for each communication flow is latency time between, for example, transmission of a packet and retransmission of the packet. In the case where the time-out period of the retransmission timer has elapsed and time-out has occurred, for example, the delivery confirmation transmission unit 26 retransmits the packet, and cancels the retransmission timer in the case where the delivery confirmation transmission unit 26 receives an acknowledgment response before the time-out occurs. Furthermore, the delivery confirmation transmission unit 26 increases, for example, in a case of a TCP, a time-out value of the retransmission timer at the time of retransmission. Furthermore, the delivery confirmation transmission unit 26 forcibly disconnects the communication in the case where, for example, the delivery confirmation transmission unit 26 does not receive an acknowledgment response even if retransmission is repeated by a certain number of times.

The acknowledgment response number stored as the management information for each communication flow is, for example, a number that indicates the data that has already been received by the delivery confirmation reception unit 27 that is provided on the data reception side. For the acknowledgment response number, for example, a sequence number of the transmission data that is to be received next time is used in order to indicate the location of the data that has already been received in the area included in all of the pieces of transmission data. Furthermore, the sequence number is assigned to, as illustrated in FIG. 4, for example, the header portion of the transport layer packet. For example, when the delivery confirmation reception unit 27 receives a packet, in the case where the transmission sequence number of the received header indicates a number equal to or larger than the acknowledgment response numbers that are stored in the high reliability communication information 50, the delivery confirmation reception unit 27 determines that the data is new reception data, and transmits a transmission request for an acknowledgment response packet to the delivery confirmation transmission unit 26 that is provided on the data transmission side, and then the acknowledgment response number is updated.

Each of the free reception buffer size and the destination side free reception buffer size that are stored as the management information for each communication flow indicates an amount of data that is able to be transmitted without waiting for, for example, the acknowledgment response. In a case of the TCP, the free reception buffer size is referred to as a window size.

Furthermore, as illustrated in FIG. 3, the high reliability communication information 50 stores therein in an associated manner, for example, as the retransmission packet information, information, such as a retransmission timer ID and a retransmission purpose packet.

The retransmission timer ID stored in the retransmission packet information is, for example, an identifier for identifying a retransmission packet that is to be retransmitted at the time of retransmission time-out.

The retransmission purpose packet stored in the retransmission packet information is, for example, information related to the packet that is extracted and retransmitted by the delivery confirmation transmission unit 26 at the time of the retransmission time-out, and includes a storage address and a packet size of the packet.

A description will be given here by referring back to FIG. 2. The flow control transmission unit 30 transmits a packet in the case where, for example, a free space is present in the destination side free reception buffer, whereas, in the case where a free space is not present in the destination side free reception buffer, the flow control transmission unit 30 waits until a free space becomes available. Furthermore, the flow control transmission unit 30 subtracts an amount corresponding to the transmission data size from the size of the destination side free reception buffer stored in the high reliability communication information 50 at the time of, for example, transmission of the packet, and assigns the own free reception buffer size to be stored in the high reliability communication information 50 to the transmission packet header.

The error detection transmission unit 32 calculates an error detection purpose result obtained in the packet in accordance with, for example, an existing algorithm, and assigns the calculation result to the header.

The network layer transmission unit 34 has a role of, for example, a network layer in the OSI reference model.

The data link layer transmission unit 36 has a role of, for example, a data link layer in the OSI reference model. Furthermore, the data link layer transmission unit 36 is divided into, for example, a data link layer transmission unit (1) 38 and a data link layer transmission unit (2) 41 in the CPU module 20 and the NIC 40, respectively.

The data link layer transmission unit (1) 38 has a role of, for example, a higher layer, that is, specifically, has a role of a logical link control (LLC) sub layer, or the like.

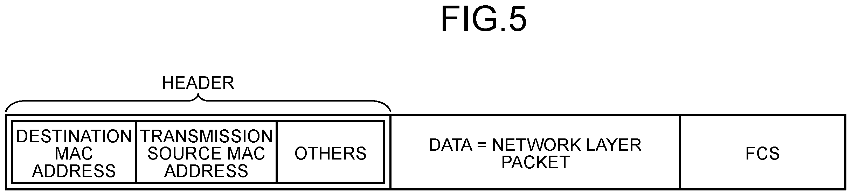

The data link layer transmission unit (2) 41 has a role of, for example, a lower layer corresponding to the data link layer, that is, has a role of, for example, a media access control (MAC) sub layer, or the like. The data link layer transmission unit (2) 41 calculates an error detection purpose result obtained in the data link layer frame in accordance with, for example, an existing algorithm, and assigns the calculation result to the FCS area included in the data link layer frame. Moreover, the data link layer frame is, for example, an Ethernet frame. FIG. 5 is a diagram illustrating one example of a format of the data link layer frame. The calculation result that is used for the error detection of the data link layer frame is assigned to, for example, the FCS area illustrated in FIG. 5. Furthermore, the data link layer transmission unit (2) 41 transmits the data link layer frame to, for example, the information processing apparatus 10 provided on the data reception side, that is, to the communication node 2.

A description will be given here by referring back to FIG. 2. In the following, each of the processing units included in the information processing apparatus 10 provided on the data reception side, that is, the communication node 2, will be described. The order of the descriptions of the respective processing units will be given in the order of the layers in accordance with the flow of the data, starting from the higher layer in a case of the data transmission, and starting from the lower layer in a case of the data reception. The CPU reception unit 23 includes, for example, a high reliability communication reception unit 25, a network layer reception unit 35, and a data link layer reception unit 37, receives the data that has been transmitted from the communication node 1, and then performs a high reliability communication process.

The high reliability communication reception unit 25 has a role of, for example, a higher layer located between the transport layer and the application layer in the OSI reference model. The high reliability communication reception unit 25 includes, for example, the delivery confirmation reception unit 27, a flow control reception unit 31, and an error detection reception unit 33, and, in the TCP in the transport layer, the same function as the functions performed by these units is packaged.

The delivery confirmation reception unit 27 includes, for example, a duplicate detection unit 29, and, in the case where the delivery confirmation reception unit 27 receives data, the delivery confirmation reception unit 27 receives the data after calling out the duplicate detection unit 29 and performing a processing on the data. The duplicate detection unit 29 performs duplicate detection by comparing, for example, the sequence number of the packet header with the acknowledgment response number stored in the high reliability communication information 50, and, in the case where the reception packet is data that has not yet been received, the duplicate detection unit 29 receives the data, and, in the case where the reception packet is data that has been received, the duplicate detection unit 29 discards the data. Furthermore, for example, in the case where the delivery confirmation reception unit 27 receives a reception packet, the delivery confirmation reception unit 27 delivers a transmission request for an acknowledgment response with respect to the reception data to the delivery confirmation transmission unit 26 that is provided on the data transmission side. In the case where, for example, the delivery confirmation reception unit 27 receives the acknowledgment response from the delivery confirmation transmission unit 26 that is provided on the data transmission side, the delivery confirmation reception unit 27 cancels the retransmission timer, and deletes the entry targeted for the retransmission packet stored in the high reliability communication information 50.

The flow control reception unit 31 updates the high reliability communication information 50 that is used by, for example, the flow control transmission unit 30. The flow control reception unit 31 subtracts an amount corresponding to the reception data size from the free reception buffer size stored in the high reliability communication information 50, and furthermore, updates the destination side free reception buffer size stored in the high reliability communication information 50 to the value corresponding to the free reception buffer size that is present at the reception packet header.

The error detection reception unit 33 compares, for example, the calculation result of the header that has been calculated and assigned by the error detection transmission unit 32 provided on the data transmission side with the result of recalculation obtained by the error detection reception unit 33, and determines that the data is not corrupted in the case where the comparison results match, and determines that the data is corrupted in the case where the comparison results do not match. Moreover, for example, in the case of the TCP, an error in the packet header is detected by using a checksum.

The network layer reception unit 35 has a role of, for example, a network layer in the OSI reference model. The network layer reception unit 35 performs error detection on a datagram, similarly to, for example, the error detection performed by the error detection reception unit 33. Moreover, for example, in the case of the IP, an error in the IP datagram header is detected by using the checksum.

The data link layer reception unit 37 has a role of, for example, a data link layer in the OSI reference model. Furthermore, the data link layer reception unit 37 is divided into, for example, a data link layer reception unit (1) 39 and a data link layer reception unit (2) 42 in the CPU module 20 and the NIC 40, respectively.

The data link layer reception unit (1) 39 has a role of, for example, a higher layer, that is, specifically, has a role of a logical link control (LLC) sub layer, or the like.

The data link layer reception unit (2) 42 has a role of, for example, a lower layer corresponding to the data link layer, that is, has a role of, for example, a media access control (MAC) sub layer, or the like. The data link layer reception unit (2) 42 compares, for example, a calculation result of the FCS area included in the data link layer frame that has been calculated and assigned by the data link layer transmission unit (2) 41 with the result of recalculation obtained by the data link layer reception unit (2) 42, and determines that the data is not corrupted in the case where the comparison results match, and determines that the data is corrupted in the case where the comparison results do not match. Moreover, for example, in the case where the data link layer frame is the Ethernet frame, an error in the packet header is detected by using a CRC.

In the following, sending and receiving data to and from each of the processing units illustrated in FIG. 2 will be described. First, the control processing unit 21 delivers a transmission request for data to the delivery confirmation transmission unit 26 at an interval of, for example, a certain period.

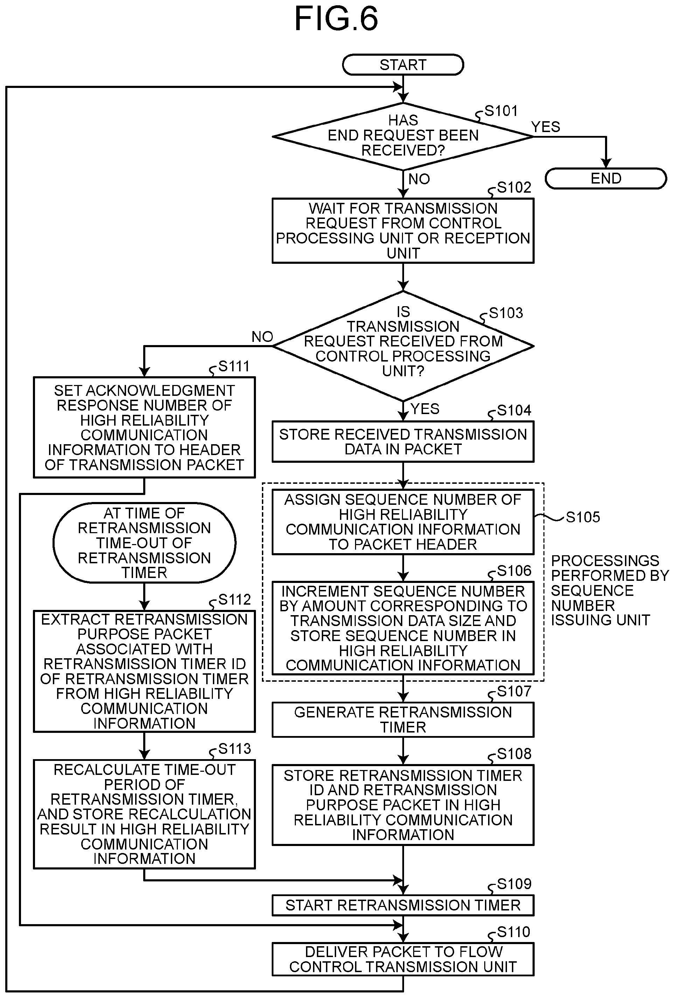

Then, if the transmission request is received from the control processing unit 21, the delivery confirmation transmission unit 26 performs, for example, a delivery confirmation processing FIG. 6 is a flowchart illustrating the flow of the delivery confirmation processing performed by the delivery confirmation transmission unit 26. The delivery confirmation processing illustrated in FIG. 6 will be described below.

First, the delivery confirmation transmission unit 26 determines whether, for example, an end request has been received (Step S101). If the end request has been received (Yes at Step S101), the delivery confirmation processing illustrated in FIG. 6 is ended.

On the other hand, if the end request has not been received (No at Step S101), the delivery confirmation transmission unit 26 waits for a transmission request from, for example, the control processing unit 21 or the delivery confirmation reception unit 27 that is provided on the data reception side (Step S102).

If the transmission request has been received, the delivery confirmation transmission unit 26 determines whether, for example, the transmission request is a request received from the control processing unit 21 (Step S 103). If the transmission request is not the request received from the control processing unit 21, that is, if the transmission request is the request received from the delivery confirmation reception unit 27 provided on the data reception side (No at Step S103), the request is the transmission request for the acknowledgment response with respect to the reception data, so that the delivery confirmation transmission unit 26 sets the acknowledgment response number stored in the high reliability communication information 50 to the header of the transmission packet (Step S111), and proceeds to Step S110.

On the other hand, If the transmission request is the request received from the control processing unit 21 (Yes at Step S103), the delivery confirmation transmission unit 26 stores the transmission data received from, for example, the control processing unit 21 into the transmission packet (Step S104).

Then, the delivery confirmation transmission unit 26 calls out, for example, the sequence number issuing unit 28, and the sequence number issuing unit 28 assigns the sequence number stored in the high reliability communication information 50 to the transmission packet header (Step S105).

Then, the sequence number issuing unit 28 increments, for example, the sequence number by an amount corresponding to the transmission data size, and stores the incremented sequence number in the high reliability communication information 50 (Step S106).

Then, the delivery confirmation transmission unit 26 generates, for example, a retransmission timer (Step S107).

Then, the delivery confirmation transmission unit 26 stores, for example, the retransmission timer ID and the retransmission purpose packet in the high reliability communication information 50 (Step S108).

Then, the delivery confirmation transmission unit 26 starts, for example, the retransmission timer (Step S109).

Then, the delivery confirmation transmission unit 26 delivers, for example, the transmission packet to the flow control transmission unit 30 (Step S110). Moreover, if the time-out period of the retransmission timer has elapsed after the transmission of the transmission packet and if time out has occurred, the delivery confirmation transmission unit 26 extracts the retransmission purpose packet associated with, for example, the retransmission timer ID of the retransmission timer that is in a time-out state from the high reliability communication information 50 (Step S112). Then, the delivery confirmation transmission unit 26 recalculates, for example, a time-out period of the retransmission timer, stores the recalculation result in the high reliability communication information 50 (Step S113), and starts the retransmission timer (Step S109).

Then, when the flow control transmission unit 30 receives the transmission request from the delivery confirmation transmission unit 26, the flow control transmission unit 30 checks, for example, the above described destination side free reception buffer, performs the flow control processing including a processing of assigning the free reception buffer size to the transmission packet header, and the like, and delivers the transmission packet to the error detection transmission unit 32.

Then, when the error detection transmission unit 32 receives the transmission request from the flow control transmission unit 30, the error detection transmission unit 32 performs the error detection processing including a processing of, for example, assigning the above described calculation result for a purpose of the error detection to the transmission packet header, and the like, and delivers the transmission packet to the network layer transmission unit 34.

Then, when the network layer transmission unit 34 receives the transmission request from the error detection transmission unit 32, the network layer transmission unit 34 performs a processing on, for example, the network layer, and delivers a transmission datagram to the data link layer transmission unit (1) 38.

Then, when the data link layer transmission unit (1) 38 receives the transmission request from the network layer transmission unit 34, the data link layer transmission unit (1) 38 performs a processing on, for example, the data link layer in the CPU module 20, and delivers the data link layer frame corresponding to the transmission frame to the data link layer transmission unit (2) 41.

Then, when the data link layer transmission unit (2) 41 receives the transmission request from the data link layer transmission unit (1) 38, the data link layer transmission unit (2) 41 performs a processing on, for example, the data link layer in the NIC 40, and transmits the transmission frame to the network by way of the physical layer.

Then, when the data link layer reception unit (2) 42 receives the reception request for the data from the network by way of the physical layer, the data link layer reception unit (2) 42 performs a processing on, for example, the data link layer in the NIC 40, and delivers the received data link layer frame to the data link layer reception unit (1) 39.

Then, when the data link layer reception unit (1) 39 receives the reception request from the data link layer reception unit (2) 42, the data link layer reception unit (1) 39 performs a processing on, for example, the data link layer in the CPU module 20, and delivers the data portion in which the header of the data link layer frame has been excluded to the network layer reception unit 35.

Then, when the network layer reception unit 35 receives the reception request from the data link layer reception unit (1) 39, the network layer reception unit 35 performs a processing on, for example, the network layer, such as error detection on the network layer datagram, and delivers the data portion in which the header of the network layer datagram has been excluded to the error detection reception unit 33.

Then, when the error detection reception unit 33 receives the reception request from the network layer reception unit 35, the error detection reception unit 33 performs the error detection processing by comparing, for example, as described above, the calculation result assigned to the header of the reception packet with the recalculation result, and delivers the reception packet to the flow control reception unit 31.

Then, when the flow control reception unit 31 receives the reception request from the error detection reception unit 33, the flow control reception unit 31 performs the flow control processing by updating, for example, as described above, the high reliability communication information 50 and the like, and, if the reception data is included in the reception packet, the flow control reception unit 31 delivers the reception packet to the delivery confirmation reception unit 27.

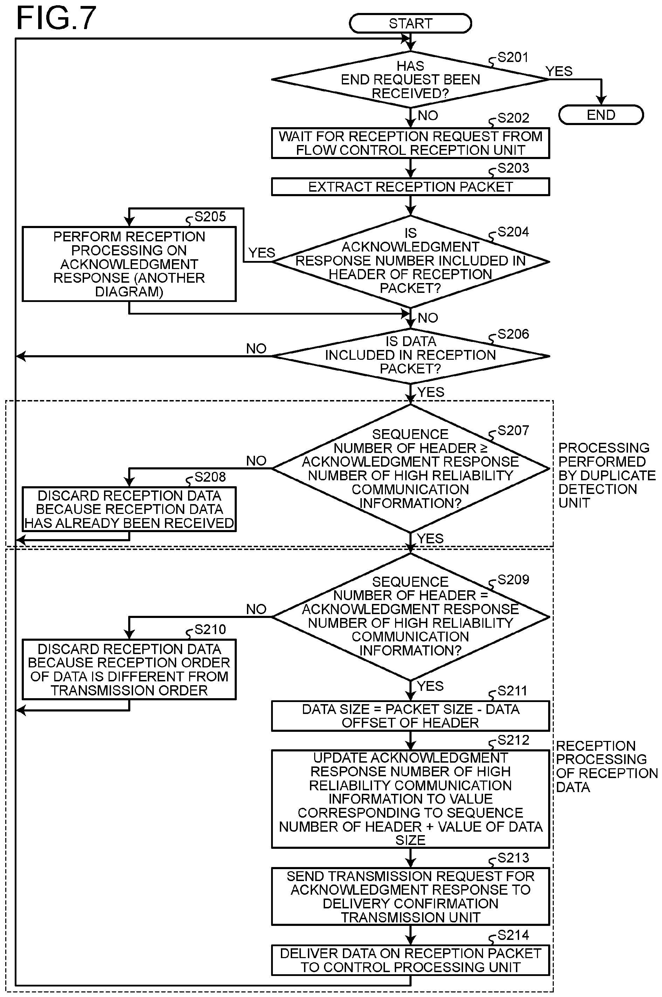

Then, when the delivery confirmation reception unit 27 receives the reception request from the flow control reception unit 31, the delivery confirmation reception unit 27 performs, for example, the delivery confirmation processing FIG. 7 is a flowchart illustrating the flow of the delivery confirmation processing performed by the delivery confirmation reception unit 27. The delivery confirmation processing illustrated in FIG. 7 will be described below.

First, the delivery confirmation reception unit 27 determines whether, for example, an end request has been received (Step S201). If the end request has been received (Yes at Step S201), the delivery confirmation processing illustrated in FIG. 7 is ended.

On the other hand, if the end request has not been received (No at Step S201), the delivery confirmation reception unit 27 waits for a reception request from, for example, the flow control reception unit 31 (Step S202).

If the reception request has been received, the delivery confirmation reception unit 27 extracts, for example, the reception packet (Step S203).

Then, the delivery confirmation reception unit 27 determines whether, for example, the acknowledgment response number is included in the header of the extracted reception packet (Step S204). If the acknowledgment response number is not included (No at Step S204), the processing proceeds to Step S206.

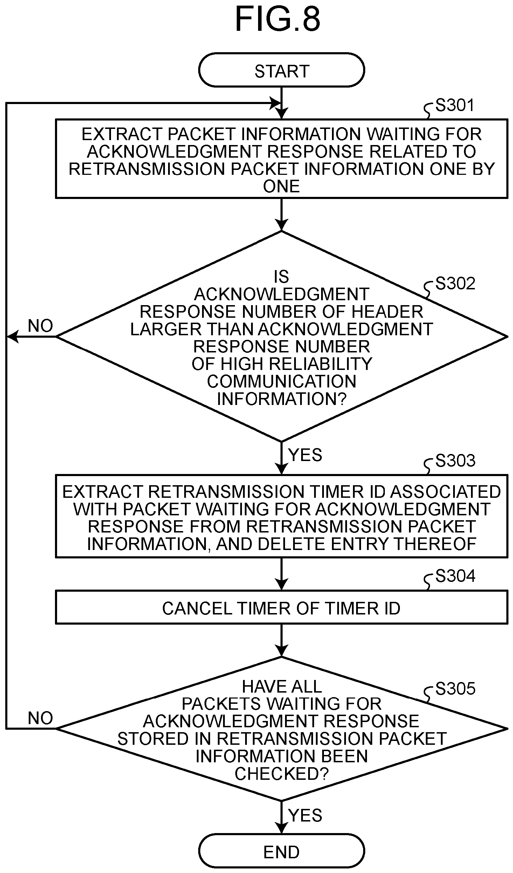

On the other hand, if the acknowledgment response number is included (Yes at Step S204), the delivery confirmation reception unit 27 performs the reception processing on, for example, the acknowledgment response (Step S205). The reception processing performed on the acknowledgment response will be more specifically described with reference to FIG. 8.

FIG. 8 is a flowchart illustrating the flow of the reception processing performed on the acknowledgment response by the delivery confirmation reception unit 27. First, the delivery confirmation reception unit 27 extracts, for example, packet information waiting for an acknowledgment response stored in the retransmission packet information illustrated in FIG. 3 one by one (Step S301).

Then, the delivery confirmation reception unit 27 determines whether, for example, the acknowledgment response number of the header of the reception packet is larger than the acknowledgment response number that is stored in the high reliability communication information 50 (Step S302). If the acknowledgment response number of the header is equal to or less than the acknowledgment response number that is stored in the high reliability communication information 50 (No at Step S302), the processing returns to Step S301, and the delivery confirmation reception unit 27 extracts, for example, a subsequent packet information waiting for an acknowledgment response.

On the other hand, if the acknowledgment response number of the header is larger than the acknowledgment response number that is stored in the high reliability communication information 50 (Yes at Step S302), the delivery confirmation reception unit 27 extracts the retransmission timer ID that is associated with the packet waiting for the acknowledgment response from, for example, the retransmission packet information, and deletes the entry targeted for the retransmission packet stored in the retransmission packet information (Step S303).

Then, the delivery confirmation reception unit 27 cancels the timer of, for example, the extracted retransmission timer ID (Step S304).

Then, the delivery confirmation reception unit 27 determines whether, for example, all of the packets waiting for the acknowledgment response stored in the retransmission packet information have been checked (Step S305). If an unchecked packet waiting for the acknowledgment response is present (No at Step S305), the processing returns to Step S301, and the delivery confirmation reception unit 27 extracts, for example, the subsequent packet information waiting for an acknowledgment response.

On the other hand, if all of the packets waiting for the acknowledgment response have been checked (Yes at Step S305), the reception processing illustrated in FIG. 8 is ended, the processing proceeds to the delivery confirmation processing performed at Step S206 illustrated in FIG. 7.

Then, the delivery confirmation reception unit 27 determines whether, for example, data is included in the reception packet (Step S206). If data is not included in the reception packet (No at Step S206), the processing returns to Step S201, and the delivery confirmation reception unit 27 waits for the reception request received from the flow control reception unit 31 until, for example, an end request is received.

On the other hand, if data is included in the reception packet (Yes at Step S206), the delivery confirmation reception unit 27 calls out, for example, the duplicate detection unit 29, and the duplicate detection unit 29 determines whether the sequence number of the header of the reception packet is equal to or larger than the acknowledgment response number stored in the high reliability communication information 50 (Step S207).

If the sequence number of the header of the reception packet is less than the acknowledgment response number stored in the high reliability communication information 50 (No at Step S207), the target reception data is the data that has already been received, so that the duplicate detection unit 29 discards, for example, the reception data (Step S208), and returns to Step S201.

On the other hand, if the sequence number of the header of the reception packet is equal to or larger than the acknowledgment response number stored in the high reliability communication information 50 (Yes at Step S207), the delivery confirmation reception unit 27 determines whether, for example, the sequence number of the header of the reception packet is equal to the acknowledgment response number stored in the high reliability communication information 50 (Step S209). If the sequence number of the header of the reception packet is not equal to the acknowledgment response number stored in the high reliability communication information 50 (No at Step S209), the reception order of the data is different from the transmission order, so that the delivery confirmation reception unit 27 discards, for example, the reception data (Step S210), and returns to Step S201.

On the other hand, if the sequence number of the header of the reception packet is equal to the acknowledgment response number stored in the high reliability communication information 50 (Yes at Step S209), the delivery confirmation reception unit 27 calculates the data size by subtracting, for example, a data offset (header length) from the packet size (Step S211).

Then, the delivery confirmation reception unit 27 updates, for example, the acknowledgment response number stored in the high reliability communication information 50 to the value obtained by adding the calculated data size to the sequence number of the header (Step S212).

Then, the delivery confirmation reception unit 27 sends a transmission request for the acknowledgment response with respect to the reception data to, for example, the delivery confirmation transmission unit 26 provided on the data transmission side (Step S213).

Then, the delivery confirmation reception unit 27 delivers, for example, the data on the reception packet to the control processing unit 21 (Step S214), and returns to Step S201.

In the above, the control system according to the conventional technology has been described, the control processing performed in a constant period needs to be stably and continuously performed for a long time, so that both high availability communication and high real time communication are required for the control system, in addition to the high reliability communication.

In the high availability communication, for example, two physically independent communication paths are prepared in advance, and, in the case where a communication abnormality, such as a single failure has occurred in a current path, the control system is required to restore the communication by itself by using an alternate path.

Furthermore, in the high real time communication, for example, the downtime period of the communication taken for restoration of the communication after the communication abnormality has occurred is required to be within a control scan period (for example, one seconds). Here, the downtime period of the communication is the total of three processing time of, for example, detection time of the communication abnormality, switching time of the communication paths, and restoration time of the communication state, and these three types of time are required to be reduced to the minimum. The detection time of the communication abnormality is a time period between, for example, a point at which a communication abnormality has occurred and a point at which the communication abnormality is detected by a communication diagnosis that is performed in a constant period. Furthermore, the switching time of the communication paths is the time at which, for example, the use of the path in which the abnormality has occurred is stopped and a point at which an alternate path is used. Furthermore, the restoration time of the communication state is a period of time taken for the restoration of communication in order to continue the communication by returning to the communication state that is immediately before, for example, the occurrence of the abnormality.

Accordingly, in the present embodiment, it is an object in one aspect of an embodiment to perform high real time communication while ensuring communication having high reliability and high availability with respect to process control communication. Furthermore, in the following, the present embodiment will be separately described in terms of a basic invention and an applied invention. The basic invention solves the problem of the conventional technology, whereas the applied invention further solves the problem of the basic invention in addition to the conventional technology.

### Configuration of control system according to basic invention

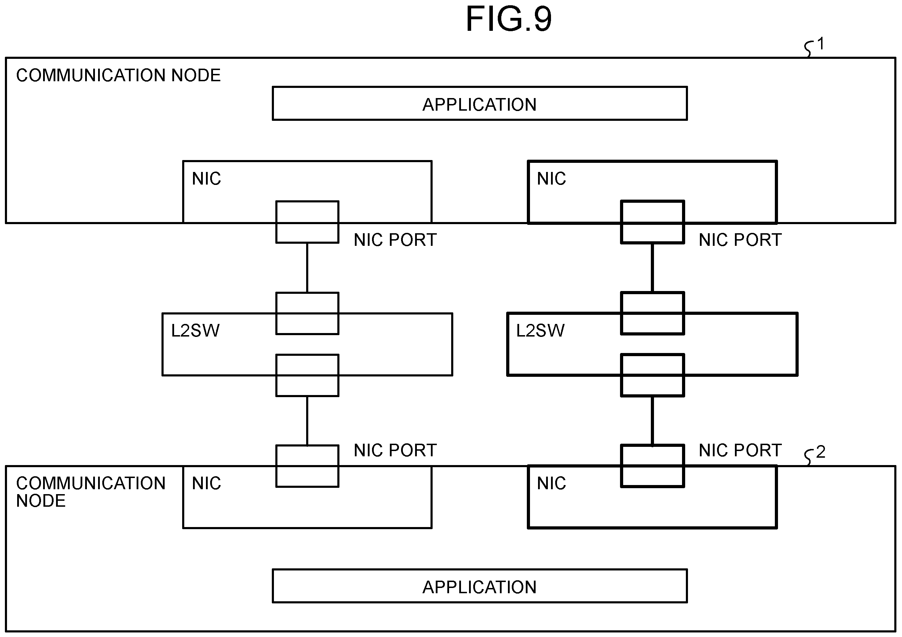

FIG. 9 is a diagram illustrating an example of a configuration of a control system according to the basic invention. As illustrated in FIG. 9, the control system according to the basic invention further includes physically independent communication paths indicated by the thick frames as compared to the communication paths included in the control system according to the conventional technology illustrated in FIG. 1. The control system according to the basic invention is constituted such that, in order to implement the high availability communication, the communication node 1 that is a transmission node duplicates transmission data and transmits each of the pieces of data to a communication node 2 that is a reception node by way of each of the two physically independent communication paths (hereinafter, sometimes collectively referred to as a "dual path") as illustrated in FIG. 9. As a result of this, as compared with the control system according to the conventional technology that transmits data to only a single communication path, there is no need to perform processes of performing a constant period diagnosis of a path, detecting a communication abnormality, switching the paths, and restoring the communication state, so that switching time of the communication paths becomes almost zero, and it is thus possible to minimize downtime of the communication. In other words, it is possible to perform high real time communication while ensuring communication having high reliability and high availability with respect to process control communication.

### Functional configuration of information processing apparatus 10 according to basic invention

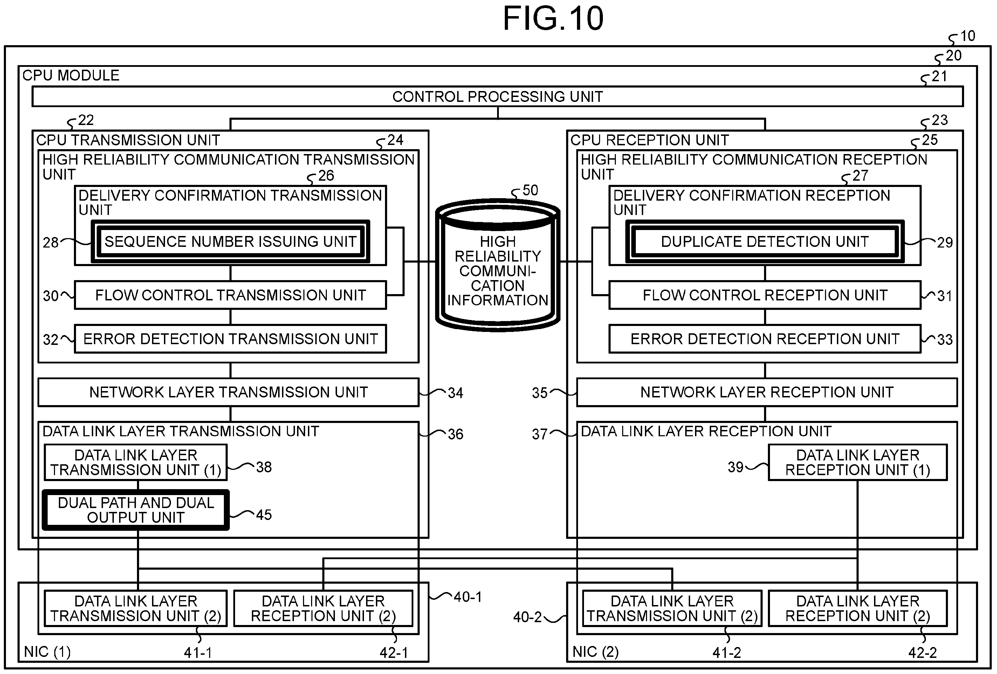

In the following, a functional configuration of the information processing apparatus 10 that corresponds to the main subject of the basic invention will be described. FIG. 10 is a diagram illustrating an example of a configuration of the information processing apparatus 10 according to the basic invention. The information processing apparatus 10 according to the basic invention duplicates, for example, a data link layer frame and transmits the duplicated frames to the dual paths. Consequently, the information processing apparatus 10 according to the basic invention includes the physically independent communication paths as compared to the information processing apparatus 10 according to the conventional technology illustrated in FIG. 2, so that the information processing apparatus 10 according to the basic invention includes a plurality of NICs 40-1 and 40-2, a plurality of data link layer transmission units (2) 41-1 and 41-2, and a plurality of data link layer reception units (2) 42-1 and 42-2 for each communication path. In addition, in order to transmit the same data link layer frame from the dual paths, the information processing apparatus 10 according to the conventional technology includes, as illustrated in FIG. 10, the dual path and dual output unit 45 that is indicated by the thick frame and that is provided between the data link layer transmission unit (1) 38 and the data link layer transmission units (2) 41-1 and 41-2.

Then, each of the processing units included in the information processing apparatus 10 according to the basic invention will be described in terms of points that are different from the respective processing units included in the information processing apparatus 10 according to the conventional technology. The different points are mainly the processes performed by the processing units of the sequence number issuing unit 28, the dual path and dual output unit 45, and the duplicate detection unit 29, and the information that is stored in the high reliability communication information 50. However, it is possible to directly apply the sequence number issuing unit 28, the duplicate detection unit 29, and the high reliability communication information 50 (indicated by double frames in Fig. 10) of the information processing apparatus 10 according to the conventional technology and thus, no addition or change is required.

The sequence number issuing unit 28 according to the basic invention assigns, in order to uniquely identify, for example, transmission data, the transmission sequence number that is managed by and stored in the high reliability communication information 50 to the packet header, and updates the transmission sequence number stored in the high reliability communication information 50 for the purpose of using the subsequent data transmission. In the basic invention, the same packet is transmitted to the dual paths, so that, in the information processing apparatus 10 provided on the data reception side, that is, in the communication node 2, the duplicate packet is discarded by using the sequence number that has been assigned to the packet header. The processes performed by the sequence number issuing unit 28 according to the basic invention are the same as the processes performed at Steps S 105 and S 106 as the delivery confirmation processing illustrated in FIG. 6.

The dual path and dual output unit 45 is operated when the dual path and dual output unit 45 receives a transmission request for the transmission frame from, for example, the data link layer transmission unit (1) 38. Furthermore, the dual path and dual output unit 45 uses, for example, a bonding function in Linux (registered trademark), or a teaming function in Windows (registered trademark) in order to transmit the transmission frame by way of the dual paths.

The duplicate detection unit 29 according to the basic invention performs duplicate detection by comparing, for example, the sequence number of the packet header with the acknowledgment response number stored in the high reliability communication information 50, and receives data in the case where a reception packet has not yet been received, or discards data in the case where the data has already been received. In the basic invention, the structure has been constituted such that the packet is to be transmitted to the dual paths, so that the duplicate packet is discarded by the information processing apparatus 10 that is provided on the data reception side, that is, by the duplicate detection unit 29 included in the communication node 2. The processes performed by the duplicate detection unit 29 according to the basic invention are the same as the processes performed at Steps S207 and S208 as the delivery confirmation processing illustrated in FIG. 7.

Then, regarding a processing of sending and receiving data to and from each of the processing units illustrated in FIG. 10, a processing that is different from the processing of sending and receiving data to and from each of the processing units included in the information processing apparatus 10 according to the conventional technology illustrated in FIG. 2 will be described. In the basic invention, unlike the conventional technology, the data link layer frame is duplicated by the dual path and dual output unit 45, and the frames are transmitted to the dual paths. Then, the duplicate frames that have been subsequently received are detected by the duplicate detection unit 29 provided on the data reception side and is then discarded.

The processes performed by up to the processes performed by the information processing apparatus 10 provided on the data transmission side, that is, the network layer transmission unit 34 included in the communication node 1, are the same as the processes performed in the conventional technology illustrated in FIG. 2.

Then, when receiving the transmission request from the network layer transmission unit 34, the data link layer transmission unit (1) 38 performs a processing performed in, for example, the data link layer in the CPU module 20, and delivers the data link layer frame that is the transmission frame to the dual path and dual output unit 45.

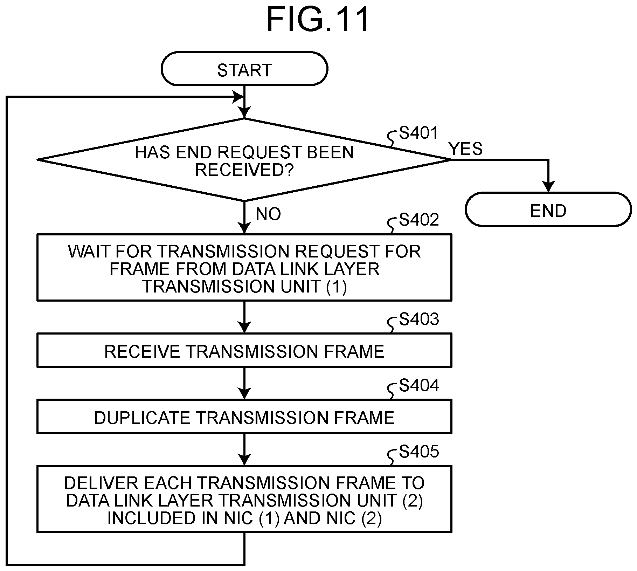

Then, when the dual path and dual output unit 45 receives the transmission request from the data link layer transmission unit (1) 38, the dual path and dual output unit 45 performs, for example, the dual path and dual output processing. FIG. 11 is a flowchart illustrating the flow of the dual path and dual output processing performed by the dual path and dual output unit 45. The dual path and dual output processing illustrated in FIG. 11 will be described.

First, the dual path and dual output unit 45 determines whether, for example, an end request has been received (Step S401). If the end request has been received (Yes at Step S401), the dual path and dual output processing illustrated in FIG. 11 is ended.

On the other hand, if the end request has not been received (No at Step S401), the dual path and dual output unit 45 waits for, for example, a transmission request for a frame sent from the data link layer transmission unit (1) 38 (Step S402).

If the transmission request has been received, the dual path and dual output unit 45 receives, for example, the data link layer frame that is the transmission frame from the data link layer transmission unit (1) 38 (Step S403).

Then, the dual path and dual output unit 45 duplicates, for example, the received transmission frame (Step S404).

Then, the dual path and dual output unit 45 delivers, for example, each of the transmission frames to the data link layer transmission unit (2) 41-1 included in the NIC (1) 40-1 and the data link layer transmission unit (2) 41-2 included in the NIC (2) 40-2 (Step S405). In other words, in response to accepting the transmission request for the data that is used for the purpose of, for example, process control, the information processing apparatus 10 provided on the data transmission side generates a first transmission frame and a second transmission frame by duplicating the transmission frame of the data link layer, transmits the first transmission frame to the first NIC, and transmits the second transmission frame to the second NIC. Furthermore, after having performed the processing at Step S405, the dual path and dual output unit 45 returns to Step S401, and waits for the transmission request for a frame sent from the data link layer transmission unit (1) 38 until, for example, an end request is received.

Then, when the transmission request is received from the dual path and dual output unit 45, each of the data link layer transmission units (2) 41-1 and 41-2 calculates a result that is used for the purpose of error detection of the data link layer frame in accordance with, for example, an existing algorithm, and assigns the calculation result to the FCS area included in the data link layer frame.

Then, each of the data link layer transmission units (2) 41-1 and 41-2 transmits the data link layer frame to, for example, the information processing apparatus 10 provided on the data reception side, that is, the communication node 2, by way of the respective communication paths. In other words, the information processing apparatus 10 provided on the data transmission side transmits, for example, the first transmission frame in the first NIC to the network and transmits, for example, the second transmission frame in the second NIC to the network.

Furthermore, the duplicate detection unit 29 provided on the data reception side performs duplicate detection by comparing, for example, the sequence number of the packet header with the acknowledgment response number stored in the high reliability communication information 50, and receives data in the case where a reception packet has not yet been received, or discards data in the case where the data has already been received. In other words, in response to receiving, for example, the first transmission frame or the second transmission frame, the information processing apparatus 10 provided on the data reception side performs duplicate detection on the first transmission frame and the second transmission frame on the basis of the sequence number of each of the packet headers, and discards, in the case where a duplication between the first transmission frame and the second transmission frame has been detected, the first transmission frame or the second transmission frame that has subsequently been received.

In this way, the information processing apparatus 10 according to the basic invention performs high real time communication while ensuring communication having high reliability and high availability with respect to process control communication by transmitting the frames to the physically independent dual paths. More specifically, for example, as described in the conventional technology, as a result of switching the paths from the current path to the alternate path, there is no need to detect a communication abnormality, so that the detection time of the communication abnormality is zero. Furthermore, as a result of switching the paths from the current path to the alternate path, there is no need to switch the communication paths, so that switching time of the communication paths is also zero. Furthermore, as a result of switching the paths from the current path to the alternate path, there is no need to restore the communication state, so that restoration time of the communication state is also zero. Furthermore, each of the processing units that transmits a frame to the physically independent dual paths is sometimes collectively referred to as a dual output unit.

In the above, the control system according to the basic invention has been described, but, the control system according to the basic invention transmits the same packet to each of the physically independent dual paths, and the duplicate packet is detected and discarded by the duplicate detection unit 29 included in the delivery confirmation reception unit 27. However, there is a problem in that, in the control system according to the basic invention as described above, a CPU load is increased in the transmission node and the reception node, and it is not possible to cope with the transport layer communication protocol that does not have a duplicate detection function.

For example, at the time of data transmission in which the CPU load is increased in the transmission node and the reception node, the data link layer protocol duplicates the frame, and transmits the transmission data that has a doubled amount. On the other hand, at the time of data reception, the reception processing to be performed in the layers including the data link layer and the network layer is performed on the reception data that has a doubled amount until the transport layer protocol discards the duplicate packet. As a result of this, in the reception node, an amount of reception processing to be performed up to the transport layer becomes doubled, so that the CPU load exerted due to the reception processing is almost twice as much as the CPU load exerted on the control system according to the conventional technology. In particular, in the case where the control system according to the basic invention is applied to an embedded device, such as a controller, included in the control system, the CPU performance is almost double-digit shorter than that of the PC, so that an adverse effect caused by an increase in the CPU load exerted on the reception processing is further increased. Regarding the adverse effect, for example, the maximum reception band that can be received by the controller included in the control system is decreased in inverse proportion to an increase in the amount of reception processing in the state in which the CPU load has reached the upper limit. Furthermore, regarding the control processing time in the control scan period, the processing is required to be completed within the period, so that, if communication processing time is increased, the processing is required to be decreased by an amount corresponding to the increased amount. Therefore, in the case where the control system according to the basic invention is applied to the controller or the like, it is required that the amount of reception processing needs to be the same as that needed for the control system according to the conventional technology by suppressing an increase in the amount of reception processing caused by the transmission of the same packets to the dual paths as much as possible.

Furthermore, regarding the problem in that it is not possible to cope with the transport layer communication protocol that does not have the duplicate detection function, for example, in the control system according to the basic invention, it is assumed that communication is to be performed by using a communication protocol that has a duplicate detection function of detecting the same packets. Accordingly, in the case where the communication protocol does not have the duplicate detection function, an additional function is needed. Furthermore, as in publisher/subscriber communication or the like regarded as promising in future control communication, in the case where the transport layer protocol does not have the duplicate detection function, an additional function with respect to the communication protocol is separately required.

As a result of this, in the applied invention, it is an object in one aspect of an embodiment to solve the above described problem in the basic invention in addition to the problem in the conventional technology, and to perform high real time communication while ensuring communication having high reliability and high availability with respect to process control communication.

### Configuration of control system according to applied invention

The configuration of the control system according to the applied invention is the same as the configuration of the control system according to the basic invention illustrated in FIG. 9.

### Functional configuration of information processing apparatus 10 according to the applied invention

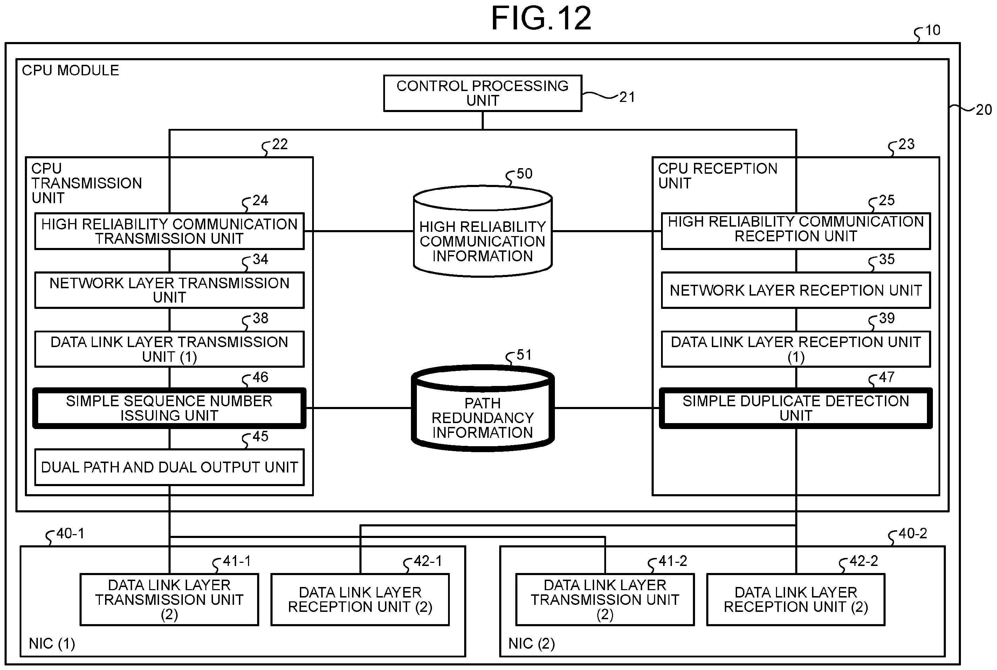

In the following, a functional configuration of the information processing apparatus 10 that corresponds to the main subject of the applied invention will be described. FIG. 12 is a diagram illustrating an example of a configuration of the information processing apparatus 10 according to the applied invention. The information processing apparatus 10 according to the applied invention performs duplicate detection on the reception packet, which is performed in, for example, the layers corresponding to the transport layer or above in the information processing apparatus 10 according to the basic invention, in the data link layer. As a result of this, as compared to the information processing apparatus 10 according to the basic invention illustrated in FIG. 10, the information processing apparatus 10 according to the applied invention includes, as illustrated in FIG. 12, the simple sequence number issuing unit 46 that is indicated by the thick frame and that is provided between the data link layer transmission unit (1) 38 and the dual path and dual output unit 45. Furthermore, the information processing apparatus 10 according to the applied invention includes, as illustrated in FIG. 12, the simple duplicate detection unit 47 that is indicated by the thick frame and that is provided between the data link layer reception unit (1) 39 and the data link layer reception units (2) 42-1 and 42-2. Furthermore, the information processing apparatus 10 according to the applied invention stores, as illustrated in FIG. 12, the path redundancy information 51 that is indicated by the thick frame in the storage unit. Furthermore, in FIG. 12, for the purpose of convenience, the high reliability communication transmission unit 24 and the high reliability communication reception unit 25 illustrated in FIG. 10 are not illustrated in detail, and the illustrations of the data link layer transmission unit 36 and the data link layer reception unit 37 are omitted.

In the following, each of the processing units included in the information processing apparatus 10 according to the applied invention will be described in terms of points that are different from the respective processing units included in the information processing apparatus 10 according to the basic invention. The different points are mainly the simple sequence number issuing unit 46, the simple duplicate detection unit 47, and the path redundancy information 51.

The simple sequence number issuing unit 46 is added between, for example, the data link layer transmission unit (1) 38 included in the data link layer transmission unit 36 and the dual path and dual output unit 45. The simple sequence number issuing unit 46 issues, for example, a sequence number for uniquely identifying the data link layer frame, and assigns the sequence number to the header. Furthermore, the location in which the sequence number is assigned is an option area included in, for example, the data link layer frame header. In other words, the information processing apparatus 10 provided on the data transmission side assigns, for example, an identifier for uniquely identifying the transmission frame to the option area included in the header of the transmission frame.

Furthermore, there may be a case in which a protocol that does not have the option area depending on the data link layer, so that, in such a case, for example, the sequence number is assigned to the option area included in the datagram header of the network layer. In other words, the information processing apparatus 10 provided on the data transmission side assigns an identifier for uniquely identifying the transmission frame to the option area included in, for example, the datagram header of the network layer. In a case of the TCP/IP, a variable length option area is present in an IP header, so that it is possible to easily add the sequence number. Furthermore, the sequence number according to the basic invention is incremented by one (+1) every time data with one byte is transmitted for each communication flow, whereas the sequence number issued by the simple sequence number issuing unit 46 is incremented, for example, by one every time one frame is transmitted to each of the transmission destinations, so that it is possible to easily manage the sequence numbers. In other words, the information processing apparatus 10 provided on the data transmission side issues, for example, an identifier for uniquely identifying a transmission frame for each transmission destination of the transmission frame and for each transmission frame.

Furthermore, in order to distinguish the sequence number that is issued by the simple sequence number issuing unit 46 from the sequence number that is issued by the sequence number issuing unit 28, hereinafter, the sequence number that is issued by the simple sequence number issuing unit 46 is sometimes referred to as a "simple sequence number". Furthermore, in the case where a simple sequence number is added to the data link layer frame, for example, a stream function of Unix (registered trademark) System V, a filtering function of BSD Unix, a driver layering function of Windows, or the like may be used. With these functions, it is possible to easily add a processing without adversely affecting the existing protocol process.

The simple duplicate detection unit 47 is added between, for example, the data link layer reception unit (1) 39 included in the data link layer reception unit 37 and the data link layer reception units (2) 42-1 and 42-2. The simple duplicate detection unit 47 stores therein, for example, the simple sequence number of the firstly received frame for each data transmission source in order to determine whether the received frame is the frame that is received first time or is the frame that is received second time. In the case where the simple duplicate detection unit 47 receives the frame having the same simple sequence number as the stored simple sequence number, the simple duplicate detection unit 47 detects, for example, the duplicated reception frame and discards the detected reception frame. In other words, for example, the duplicate detection of the first transmission frame and the second transmission frame and the discard of the first transmission frame or the second transmission frame are performed in the data link layer. The duplicate detection according to the basic invention is performed in the transport layer, whereas, in the applied invention, the duplicate detection is performed in the data link layer, so that there is no need to perform a processing corresponding to an amount of the duplicate frame in the reception processing to be performed in the network layer and the transport layer. Furthermore, the duplicate detection according to the basic invention is detected for each communication flow and is discarded, whereas, in the applied invention, the duplication is detected for each frame and is discarded, so that it is possible to easily perform the processing as compared to the basic invention.

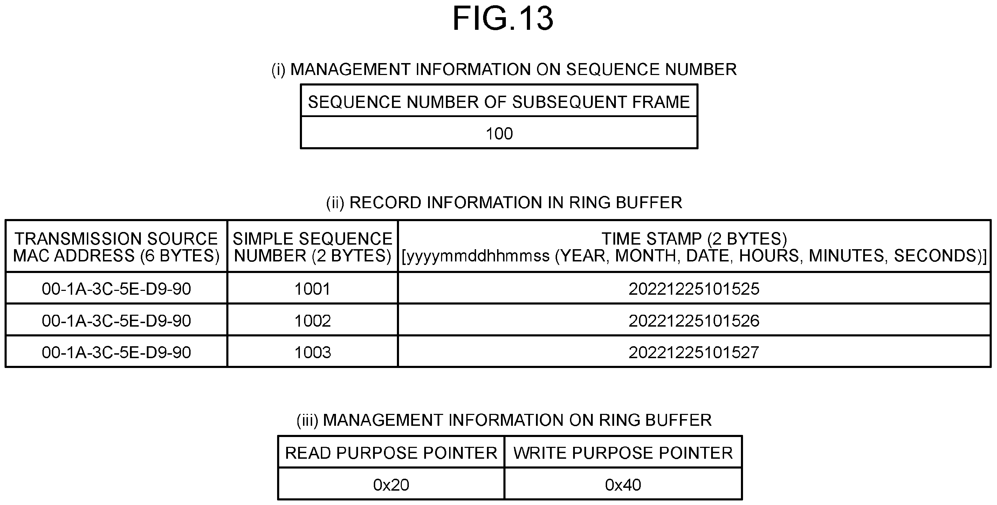

The path redundancy information 51 stores therein, for example, information for performing duplicate detection on a frame performed in the data link layer. FIG. 13 is a diagram illustrating one example of the path redundancy information 51. As illustrated in FIG. 13, the path redundancy information 51 stores therein, for example, as the management information on the sequence number, the sequence number of the subsequent frame. The sequence number of the subsequent frame is the simple sequence number that is assigned by the simple sequence number issuing unit 46 to, for example, the subsequent transmission frame. Furthermore, the sequence number of the subsequent frame is incremented by one (+1) every time, for example, a frame is transmitted, and, in the case where the sequence number reaches the maximum sequence number, the sequence number returns to the initial value (for example, 1).

Furthermore, as illustrated in FIG. 13, the path redundancy information 51 stores therein in an associated manner, for example, information, such as the record information stored in the ring buffer, pieces of information on a transmission source MAC address, a simple sequence number, and a time stamp. Here, the ring buffer is a logical ring-shaped buffer in which, for example, the end portion of the buffer is connected to the starting portion of the buffer, and pieces of data are sequentially stored from the starting portion to the end portion, and are stored by returning to the starting portion when the pieces of data are stored up to the end portion.

In the record information stored in the ring buffer, therein, for example, pieces of information for uniquely identifying each of the received frames are sequentially stored, and the frame is able to be uniquely identified by using the transmission source MAC address, the simple sequence number, and the time stamp. Furthermore, the size of the record that can be stored in the record information stored in the ring buffer is, for example, the size capable of storing in the ring buffer all of the frames that are to be transmitted within frame lifetime Time To Live (TTL) of the transmission frame (a period of time valid for a frame between transmission of the frame to the network and reception of the frame. The TTL is set to time corresponding to, for example, 10 times larger than the maximum communication delay. For example, 10 seconds). As a result of this, it is guaranteed that reception record of all of the valid transmission frames are able to be stored. The size of the record is, for example, the same as the maximum sequence number in the case where the sequence number is increased by one (+1) for each frame after starting from a value of 1.

The transmission source MAC address stored in the record information stored in the ring buffer is an address for uniquely identifying, for example, the transmission source of the received frame. The transmission source MAC address is used to identify the transmission source without referring to, for example, the transport layer header. Furthermore, the transmission source MAC address stores therein, for example, the transmission source MAC address of the frame header is stored when the reception frame.

The simple sequence number stored in the record information stored in the ring buffer is, for example, the number that is used for uniquely identifying the received frame. The simple sequence number is used to, for example, identify the data without referring to the transport layer header. Furthermore, the simple sequence number stores therein, for example, the simple sequence number of the frame header when the reception frame is received.

The time stamp stored in the record information stored in the ring buffer indicates the time, at which the simple sequence number is stored, that is almost equivalent to, for example, the time at which the frame is received. In the case where the storage elapse time for storing a record that is calculated from the time stamp is shorter than the frame time to live, that is, shorter than a storage validity period, the subject record is assumed to be valid, whereas, in the case where the storage elapse time is longer than the frame time to live, it is determined to be invalid. As a result of this, it is possible to eliminate useless detection of the frame.

Furthermore, as illustrated in FIG. 13, the path redundancy information 51 stores therein in an associated manner, for example, as the management information stored in the ring buffer, information on a read purpose pointer, a write purpose pointer, and the like. The management information stored in the ring buffer indicates, for example, information on the ring buffer itself, and the information for updating the record information stored in the ring buffer is stored.

The read purpose pointer stored in the management information stored in the ring buffer is, for example, the pointer to the record that is used for the subsequent duplicate detection from among the record in which the information on the reception frame is stored, and is used to determine the record row in which the information is to be read out. For example, in case where the simple sequence number that is assigned to the reception frame is compared, the simple sequence number stored in the record row indicated by the read purpose pointer is extracted, and the duplicate detection is performed.

The write purpose pointer stored in the management information stored in the ring buffer is a pointer to the record in which, for example, the information on the newly received frame to be subsequently stored. For example, in the case where the frame with an assigned simple sequence number that is not stored in the path redundancy information 51 is received, the transmission source MAC address, the simple sequence number, and the time stamp are stored in the record row indicated by the write purpose pointer.

Then, a processing of sending and receiving to and from each of the processing units illustrated in FIG. 12 will be described in terms of a processing that is different from the processing of sending and receiving data to and from each of the processing units included in the information processing apparatus 10 according to the basic invention illustrated in FIG. 10. In the applied invention, unlike the basic invention, by allowing the data link layer to have the duplicate detection function, there is no need to perform the processes performed between the data link layer reception unit (1) 39 and the high reliability communication reception unit 25, such as the error detection reception unit 33 or the like, with respect to the data link layer frame that has been received in a duplicated manner.

The processes performed in the information processing apparatus 10 provided on the data transmission side, that is, the processes performed by up to the data link layer transmission unit (1) 38 included in the communication node 1, are the same as the processes performed in the basic invention illustrated in FIG. 10.

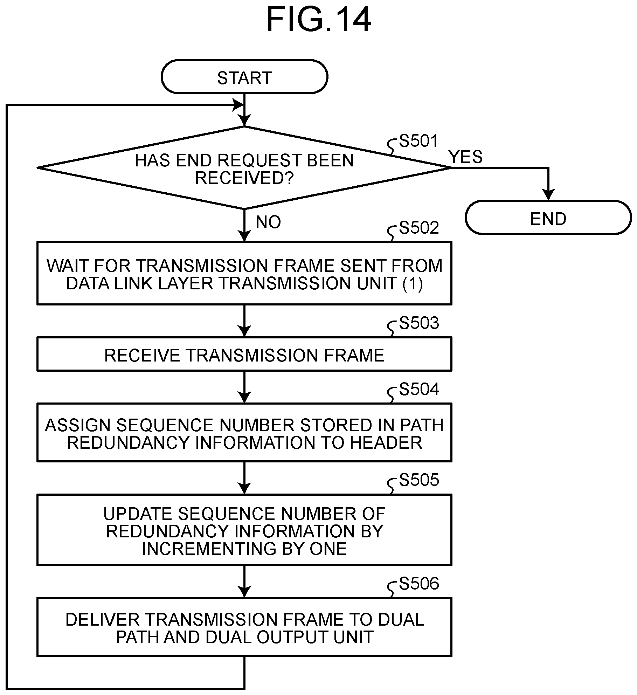

Then, when the simple sequence number issuing unit 46 receives a transmission request from the data link layer transmission unit (1) 38, the simple sequence number issuing unit 46 performs, for example, a simple sequence number issuing Processing. FIG. 14 is a flowchart illustrating the flow of the simple sequence number issuing processing performed by the simple sequence number issuing unit 46. The simple sequence number issuing processing illustrated in FIG. 14 will be described below.

First, the simple sequence number issuing unit 46 determines whether, for example, an end request has been received (Step S501). If the end request has been received (Yes at Step S501), the simple sequence number issuing processing illustrated in FIG. 14 is ended.

On the other hand, if the end request has not been received (No at Step S501), the simple sequence number issuing unit 46 waits for a transmission frame sent from, for example, the data link layer transmission unit (1) 38 (Step S502).

If the transmission frame has been received, the simple sequence number issuing unit 46 receives, for example, the data link layer frame that is the transmission frame from the data link layer transmission unit (1) 38 (Step S503).

Then, the simple sequence number issuing unit 46 assigns, for example, the sequence number of the subsequent frame stored in the path redundancy information 51 to the header (Step S504). In other words, the information processing apparatus 10 provided on the data transmission side issues, for example, an identifier for uniquely identifying the transmission frame, and then assigns the issued identifier to the transmission frame.

Then, the simple sequence number issuing unit 46 updates the sequence number by incrementing, for example, the sequence number of the subsequent frame stored in the path redundancy information 51 by incrementing the sequence number by one (+1) (Step S505). Furthermore, in the case where the sequence number has already reached the maximum sequence number, the sequence number is updated to the initial value (for example, 1).

Then, the simple sequence number issuing unit 46 delivers, for example, the transmission frame to the dual path and dual output unit 45 (Step S506). Furthermore, after having performed the processing at Step S506, the processing returns to Step S501, and the simple sequence number issuing unit 46 waits for the transmission frame sent from the data link layer transmission unit (1) 38 until, for example, an end request is received.

Then, when the dual path and dual output unit 45 receives the transmission request from the simple sequence number issuing unit 46, the dual path and dual output unit 45 duplicates, for example, the received transmission frame. Then, the dual path and dual output unit 45 delivers, for example, the transmission frame to each of the data link layer transmission unit (2) 41-1 included in the NIC (1) 40-1 and the data link layer transmission unit (2) 41-2 included in the NIC (2) 40-2.

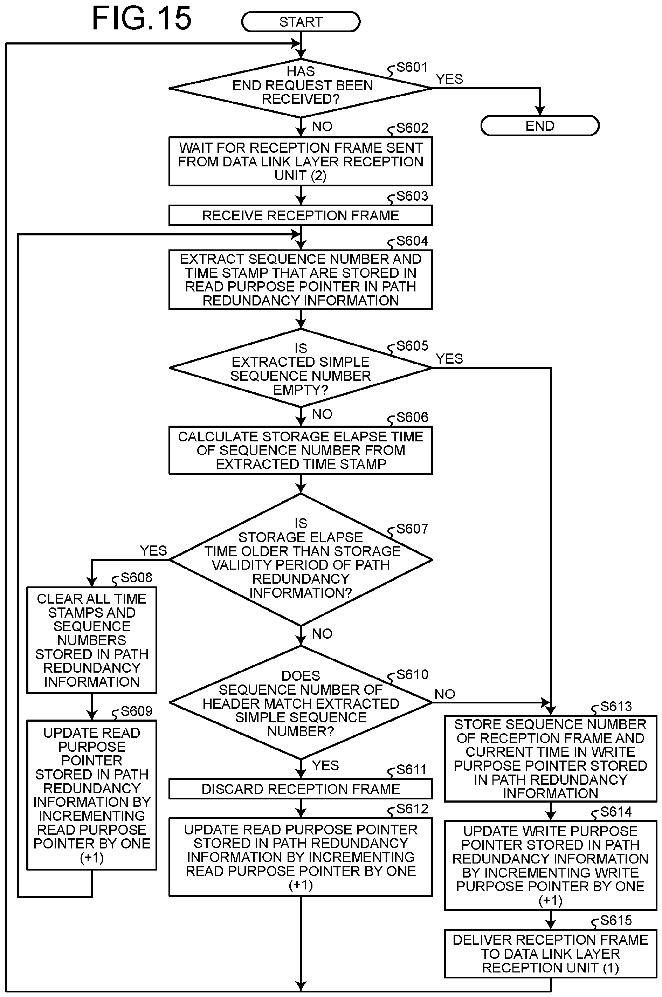

Then, a processing of sending and receiving to and from each of the information processing apparatus 10 provided on the data reception side, that is, the processing units included in the communication node 2, will be described. When the simple duplicate detection unit 47 receives the reception request from each of the data link layer reception units (2) 42-1 and 42-2, the simple duplicate detection unit 47 performs, for example, the simple duplicate detection processing. FIG. 15 is a flowchart illustrating the flow of the simple duplicate detection processing performed by the simple duplicate detection unit 47. The simple duplicate detection processing illustrated in FIG. 15 will be described below.

First, the simple duplicate detection unit 47 determines whether, for example, an end request has been received (Step S601). If the end request has been received (Yes at Step S601), the simple duplicate detection processing illustrated in FIG. 15 is ended.

On the other hand, if the end request has not been received (No at Step S601), the simple duplicate detection unit 47 waits for, for example, a reception frame sent from the data link layer reception unit (2) 42-1 or 42-2 (Step S602).

If the reception frame has been received, the simple duplicate detection unit 47 receives, for example, the data link layer frame that is the reception frame from the data link layer reception unit (2) 42-1 or 42-2 (Step S603).

Then, the simple duplicate detection unit 47 extracts, for example, the simple sequence number and the time stamp that are stored in the record row that is indicated by the read purpose pointer and that is stored in the path redundancy information 51 (Step S604).

Then, the simple duplicate detection unit 47 determines whether, for example, the extracted simple sequence number is empty (Step S605). If the simple sequence number is empty (Yes at Step S605), the processing proceeds to Step S613.

On the other hand, if the simple sequence number is not empty (No at Step S605), the simple duplicate detection unit 47 calculates the storage elapse time of the simple sequence number from, for example, the extracted time stamp (Step S606).

Then, the simple duplicate detection unit 47 determines whether, for example, the calculated storage elapse time is older than the storage validity period stored in the path redundancy information 51 (Step S607). If the storage elapse time is older than the storage validity period (Yes at Step S607), the simple duplicate detection unit 47 clears all of the time stamps and the simple sequence numbers stored in the path redundancy information 51 (Step S608).

Then, the simple duplicate detection unit 47 updates, for example, the read purpose pointer stored in the path redundancy information 51 by incrementing the read purpose pointer by one (+1) (Step S609), and returns to Step S604.

On the other hand, if the storage elapse time is not before the storage validity period (No at Step S607), the simple duplicate detection unit 47 determines whether, for example, the simple sequence number of the header matches the extracted simple sequence number (Step S610). If the simple sequence number of the header does not match the extracted simple sequence number (No at Step S610), the processing proceeds to Step S613.

On the other hand, if the simple sequence number of the header matches the extracted simple sequence number (Yes at Step S610), the simple duplicate detection unit 47 discards, for example, the reception frame (Step S611). In other words, in response to receiving, for example, the first transmission frame or the second transmission frame, the information processing apparatus 10 provided on the data reception side performs duplicate detection on duplication between the first transmission frame and the second transmission frame on the basis of the identifier assigned to the transmission frame by the information processing apparatus 10 provided on the data transmission side, and, in the case where duplication has been detected between the first transmission frame the second transmission frame, the information processing apparatus 10 discards the first transmission frame or the second transmission frame that is received afterwards.

Then, the simple duplicate detection unit 47 updates, for example, the read purpose pointer stored in the path redundancy information 51 by incrementing the read purpose pointer by one (+1) (Step S612), and returns to Step S601.

Furthermore, if the processing proceeds to Step S613, the simple duplicate detection unit 47 stores, for example, the simple sequence number of the reception frame and the current time (time stamp) in the record row that is indicated by the write purpose pointer stored in the path redundancy information 51 (Step S613).

Then, the simple duplicate detection unit 47 updates, for example, the write purpose pointer stored in the path redundancy information 51 by incrementing the write purpose pointer by one (+1) (Step S614).

Then, the simple duplicate detection unit 47 delivers, for example, the reception frame to the data link layer reception unit (1) 39 (Step S615), and returns to Step S601.

Furthermore, in the simple duplicate detection processing illustrated in FIG. 15, description of the processing performed in the case where the frame is received in the order that is different from the transmission order of the frames, and processing of returning to the first processing in the case where each of the read purpose pointer and the write purpose pointer reaches an end point of the ring buffer are omitted.

In this way, the information processing apparatus 10 according to the applied invention is able to deliver the frame that is received first time to the reception unit located in the higher layer without delay by assigning the simple sequence number to the header option area included in the data link layer frame and detecting duplication by recording the simple sequence number in the reception unit in order to apply to the control communication in which real time communication is needed. Furthermore, among the duplicate detection functions of detecting a duplicated frame, in order to surely discard a duplicate frame without expanding the frame, there may be a function of waiting for reception of two duplicate frames, delivering one of the frames to the reception unit provided in the higher layer after having checked both of the frames are the same, and discarding the other frame. In the applied invention, the data link layer reception unit 37 discards the duplicate frames, so that the reception units provided in the network layer and the transport layer do not need to perform the error detection processing on the duplicate frames. Furthermore, although the error detection processing performed by the data link layer reception unit 37 is also performed on the duplicate frames because the frames are not discarded, a NIC coprocessor performs the error detection processing, so that the error detection processing does not affect the CPU load exerted on the CPU module 20.

Furthermore, as the applied invention (2), if the information processing apparatus 10 allows the same function as the duplicate detection function provided in the higher layer, such as the transport layer, to be performed in advance in the data link layer on the basis of, for example, the sequence number of the packet header of the TCP or the like, the information processing apparatus 10 is able to detect the duplicate frame without performing a useless protocol processing on a discard packet in the network layer and the transport layer.

In the applied invention (2), the functional configuration of the information processing apparatus 10 provided on the data transmission side is the same as that used in, for example, the basic invention illustrated in FIG. 10, and is constituted such that the sequence number issuing unit 28 that is included in the delivery confirmation transmission unit 26 and that is prepared in the transport layer, such as the TCP, is used. Furthermore, the dual path and dual output unit 45 is separately prepared.

Furthermore, in the applied invention (2), the functional configuration of the information processing apparatus 10 provided on the data reception side is constituted such that an existing duplicate detection unit provided in the transport layer is used instead of newly adding the duplicate detection function performed by the simple duplicate detection unit 47, as described in, for example, the applied invention illustrated in FIG. 12. Furthermore, for example, similarly to a case in the applied invention illustrated in FIG. 12, the duplicate detection unit, such as the TCP, is called out from the data link layer. Furthermore, for example, when the duplicate detection unit is called out, there is a need to deliver the header information on the transport layer, such as the TCP. Furthermore, for example, there is a need to extract the data portion of the Ethernet frame from the header of the transport layer to perform mapping the data portion onto the IP datagram, extract the mapped data portion to further perform mapping the data portion onto the packet of the TCP, and extract the header.

In this way, in the applied invention (2), the protocol processing performed in the network layer or the data link layer is not performed on the duplicate frame, so that, the CPU load is reduced as compared to the basic invention. Furthermore, as compared to the applied invention illustrated in FIG. 12, it is possible to achieve implementation by simply calling out the duplicate detection unit, such as an existing TCP, from the data link layer, so that there is no need to use the simple sequence number issuing unit 46 and the simple duplicate detection unit 47.

### Other embodiment

Furthermore, in the applied invention, the duplicate detection of the reception packet is performed in the data link layer, but, for example, a duplicate detection function may be added between the physical layer and the data link layer, and the added duplicate detection function may perform the duplicate detection. The duplicate detection function may be added in, for example, a NIC provided in the communication node. In other words, for example, the duplicate detection between the first transmission frame and the second transmission frame and a discard of the first transmission frame or the second transmission frame are performed between the physical layer and the data link layer. Therefore, the coprocessor provided in the NIC performs the duplicate detection function and discards the duplicate frame, so that the load applied to the CPU module 20 is the same as that described in the conventional technology.

Furthermore, by adding a duplicate detection function between the data link layer and the network layer, the duplicate detection on the reception packet may be performed by the duplicate detection function. In this way, the duplicate detection is allowed to be performed by another free core on a CPU card provided in the transmission/reception node. Therefore, the coprocessor provided on the NIC performs the duplicate detection function and discards the duplicate frame, so that an amount of the CPU load exerted on the CPU module 20 is the same as that in the conventional technology. In other words, for example, the duplicate detection between the first transmission frame and the second transmission frame, and a discard of the first transmission frame or the second transmission frame are performed between the data link layer and the network layer.

### Effect

As described above, in response to receiving the transmission request for the data used for the process control, the information processing apparatus 10 provided on the data transmission side generates the first transmission frame and the second transmission frame by duplicating the transmission frames of the data link layer, transmits the first transmission frame to the first NIC, transmits the second transmission frame to the second NIC, transmits the first transmission frame in the first NIC to the network, and transmits the second transmission frame in the second NIC to the network.

As a result of this, as compared to the control system that is used in the conventional technology and that transmits data to only a single communication path, the information processing apparatus 10 does not need to perform the processes of performing a constant period diagnosis of a path, detecting a communication abnormality, switching the paths, and restoring the communication state, so that switching time of the communication paths becomes almost zero, and it is thus possible to minimize downtime of the communication, so that it is possible to perform high real time communication while ensuring communication having high reliability and high availability with respect to process control communication.

Furthermore, in response to receiving the first transmission frame or the second transmission frame, the information processing apparatus 10 provided on the data reception side performs duplicate detection between the first transmission frame and the second transmission frame on the basis of the sequence number of the packet header, and discards, in the case where duplication of the first transmission frame and the second transmission frame has been detected, the first transmission frame or the second transmission frame that is received later.

As a result of this, regarding the detection and the discard of the frame transmitted in the dual path, the information processing apparatus 10 is able to make use of the detection processing and the discard processing on the duplicate packet performed in the conventional technology.

Furthermore, the information processing apparatus 10 provided on the data transmission side issues an identifier for uniquely identifying the transmission frame, and assigns the identifier to the transmission frame, whereas, the information processing apparatus 10 provided on the data reception side performs duplicate detection between the first transmission frame and the second transmission frame on the basis of the identifier by responding to the received first transmission frame or the second transmission frame, and discards, in the case where duplication of the first transmission frame and the second transmission frame has been detected, the first transmission frame or the second transmission frame that is received later.

As a result of this, for example, the information processing apparatus 10 detects and discards the frame for each frame, so that it is possible to perform the processing as compared to a case in which the detection and discard processes are performed for each communication flow, and, furthermore, it is also possible to cope with the transport layer communication protocol that does not have the duplicate detection function.

Furthermore, the processing of issuing the identifier for uniquely identifying the transmission frame performed by the information processing apparatus 10 provided on the data transmission side includes a processing of issuing an identifier for the transmission frame performed for each transmission destination and for each transmission frame.

As a result of this, the information processing apparatus 10 is able to easily manage the sequence number because the sequence number is incremented by one every time a single frame is transmitted for each transmission destination.

Furthermore, the processing of assigning the identifier to the transmission frame performed by the information processing apparatus 10 provided on the data transmission side includes a processing of assigning the identifier to an option area included in the header of the transmission frame.

As a result of this, the information processing apparatus 10 is able to perform high real time communication while ensuring communication having high reliability and high availability without adding a new data area in order to assigning the identifier to the transmission frame.

Furthermore, the processing of assigning the identifier to the transmission frame performed by the information processing apparatus 10 provided on the data transmission side includes a processing of assigning the identifier to an option area included in the datagram header of the network layer.

As a result of this, the information processing apparatus 10 is able to perform high real time communication while ensuring communication having high reliability and high availability without adding a new data area in order to assigning the identifier to the transmission frame.

Furthermore, the duplicate detection and a discard of the first transmission frame or the second transmission frame executed by the information processing apparatus 10 provided on the data reception side are performed by the data link layer reception unit (1) 39 mounted on the CPU module 20.

As a result of this, the information processing apparatus 10 does not need to perform the processing by an amount corresponding to the duplicate frame in the reception processing of the network layer and the transport layer, so that it is possible to reduce the processing load.

Furthermore, the duplicate detection and the discard of the first transmission frame or the second transmission frame executed by the information processing apparatus 10 provided on the data reception side are performed between the physical layer and the data link layer.

As a result of this, the information processing apparatus 10 discards the duplicate frame by the coprocessor provided on the NIC performing the duplicate detection function, so that it is possible to perform high real time communication while ensuring communication having high reliability and high availability without increasing the load exerted on the CPU module.

Furthermore, the duplicate detection and the discard of the first transmission frame or the second transmission frame executed by the information processing apparatus 10 provided on the data reception side are performed between the data link layer and the network layer.

As a result of this, the information processing apparatus 10 does not need to perform the processing by an amount corresponding to the duplicate frame in the reception processing of the network layer and the transport layer, so that it is possible to reduce the processing load.

### Other embodiments

In the above explanation, a description has been given of the embodiments according to the present invention; however, the present invention may also be implemented with various kinds of embodiments other than the embodiments described above.

### System

The flow of the processes, the control procedures, the specific names, and the information containing various kinds of data or parameters indicated in the above specification and drawings can be arbitrarily changed unless otherwise stated. Furthermore, specific examples, distributions, numerical values, and the like described in the embodiment are only examples and can be arbitrarily changed.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by the each of the devices can be implemented by a Central Processing Unit (CPU) and by programs analyzed and executed by the CPU or implemented as hardware by wired logic.

### Hardware

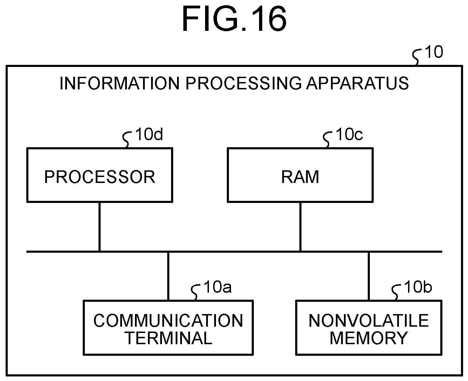

In the following, a hardware configuration of the information processing apparatus 10 that is the communication node 1 or the communication node 2 will be described. FIG. 16 is a diagram illustrating an example of a hardware configuration of the information processing apparatus 10 according to the present embodiment. As illustrated in FIG. 16, the information processing apparatus 10 includes a communication terminal 10a, a nonvolatile memory 10b, a Random-Access Memory (RAM) 10c, and a processor 10d. Furthermore, each of the units illustrated in FIG. 16 is connected by a bus or the like with each other.

The communication terminal 10a is an Ethernet port or the like, and communicates with another information processing apparatus. The nonvolatile memory 10b is a flash memory or the like, and stores therein programs and data that operate each of the functions performed by the respective processing units illustrated in FIG. 10 or FIG. 12.

The processor 10d is a CPU, a Micro Processing Unit (MPU), a Graphics Processing Unit (GPU), or the like. Furthermore, the processor 10d may be implemented by an integrated circuit, such as an Application Specific Integrated Circuit (ASIC) or a Field Programmable Gate Array (FPGA). Furthermore, the processor 10d operates threads that executes each of the functions performed by the respective processing units illustrated in FIG. 10 or FIG. 12 by reading the programs that execute the same processing as that performed by each of the processing units illustrated in FIG. 10 or FIG. 12 from the nonvolatile memory 10b and loading the read programs in the RAM 10c. For example, the thread executes the same functions as those performed by each of the processing units included in the information processing apparatus 10. Specifically, the processor 10d reads, from the nonvolatile memory 10b or the like, the programs having the same functions as the respective functions performed by the respective processing units illustrated in FIG. 10 or FIG. 12. Then, the processor 10d executes the thread for executing the same processing as that performed by each of the processing units illustrated in FIG. 10 or FIG. 12.

In this way, information processing apparatus 10 is operated as an information processing apparatus that performs various kinds or processing method by reading and executing the program. Furthermore, the programs may be distributed via a network, such as the Internet. Furthermore, the programs may be stored in a computer readable medium, such as a hard disk, a flexible disk (FD), a CD-ROM, a magneto-optical disk (MO), a digital versatile disk (DVD), or the like. Then, the programs may be executed by being read by the computer readable medium by the information processing apparatus 10 or the like.

According to an aspect of an embodiment, it is possible to perform high real time communication while ensuring communication having high reliability and high availability without adding a new data area in order to assigning the identifier to the transmission frame.

## Claims

1. An information processing program that causes an information processing apparatus (10) to execute a processing comprising:
generating a first transmission frame and a second transmission frame by duplicating a transmission frame of a data link layer in response to accepting a transmission request for data that is used for process control;
transmitting the first transmission frame to a first network interface card (NIC);
transmitting the second transmission frame to a second NIC;
transmitting the first transmission frame in the first NIC to a network; and
transmitting the second transmission frame in the second NIC to the network.

2. The information processing program according to claim 1, wherein the information processing program further causes a second information processing apparatus to execute a processing comprising,
performing duplicate detection on the first transmission frame and the second transmission frame based on a sequence number of a packet header in response to receiving the first transmission frame or the second transmission frame; and
discarding, when duplication of the first transmission frame and the second transmission frame has been detected, the first transmission frame or the second transmission frame that is received later.

3. The information processing program according to claim 1, wherein the processing further comprising,
issuing an identifier for uniquely identifying the transmission frame; and
assigning the identifier to the transmission frame, wherein the information processing program further causes a second information processing apparatus to execute a processing comprising,
performing duplicate detection on the first transmission frame and the second transmission frame based on the identifier in response to receiving the first transmission frame or the second transmission frame; and
discarding, when duplication of the first transmission frame and the second transmission frame has been detected, the first transmission frame or the second transmission frame that is received later.

4. The information processing program according to claim 3, wherein the issuing the identifier for uniquely identifying the transmission frame includes issuing the identifier for each transmission destination of the transmission frame and for each transmission frame.

5. The information processing program according to claim 3 or 4, wherein the assigning the identifier to the transmission frame includes assigning the identifier to an option area included in a header of the transmission frame.

6. The information processing program according to claim 3 or 4, wherein the assigning the identifier to the transmission frame includes assigning the identifier to an option area included in a datagram header of a network layer.

7. The information processing program according to any one of claims 3 to 6, wherein the duplicate detection and the discard of the first transmission frame or the second transmission frame are performed in a data link layer mounted on a CPU module.

8. The information processing program according to any one of claims 3 to 6, wherein the duplicate detection and the discard of the first transmission frame or the second transmission frame are performed between a physical layer and a data link layer.

9. The information processing program according to any one of claims 3 to 6, wherein the duplicate detection and the discard of the first transmission frame or the second transmission frame are performed between a data link layer and a network layer.

10. An information processing method that causes an information processing apparatus (10) to execute a processing comprising:
generating a first transmission frame and a second transmission frame by duplicating a transmission frame of a data link layer in response to accepting a transmission request for data that is used for process control;
transmitting the first transmission frame to a first network interface card (NIC);
transmitting the second transmission frame to a second NIC;
transmitting the first transmission frame in the first NIC to a network; and
transmitting the second transmission frame in the second NIC to the network.

11. An information processing apparatus (10) comprising:
a dual output unit (45) that is configured to
generate a first transmission frame and a second transmission frame by duplicating a transmission frame of a data link layer in response to accepting a transmission request for data that is used for process control;
transmit the first transmission frame to a first network interface card (NIC);
transmit the second transmission frame to a second NIC;
transmit the first transmission frame in the first NIC to a network; and
transmit the second transmission frame in the second NIC to the network.
